# FASCICULE DE BREVET EUROPEEN

(11) **EP 3 234 227 B1**
(45) Date de publication et mention de la délivrance du brevet: **03.10.2018**
(21) Numéro de dépôt: 15808431.9
(22) Date de dépôt: 14.12.2015
(51) Int. Cl.: C25B 9/20, C25B 1/12, H01M 8/02, H01M 8/00, H01M 8/24

(54) **MOTIF ELEMENTAIRE POUR REACTEUR D'ELECTROLYSE OU DE CO-ELECTROLYSE DE L'EAU (SOEC) OU PILE A COMBUSTIBLE (SOFC) A FONCTIONNEMENT SOUS PRESSION**
EINHEITSZELLE FÜR REAKTOR FÜR WASSERELEKTROLYSE ODER CO-ELEKTROLYSE (SOEC) ODER BRENNSTOFFZELLE (SOFC) MIT BETRIEB UNTER DRUCK
UNIT CELL FOR REACTOR PERFORMING WATER ELECTROLYSIS OR CO-ELECTROLYSIS (SOEC) OR FUEL CELL (SOFC) OPERATING UNDER PRESSURE

(30) Priorité: 18.12.2014 FR 1462699
(43) Date de publication de la demande: 25.10.2017
(73) Titulaire: Commissariat à l'Énergie Atomique et aux Énergies Alternatives, 75015 Paris (FR)
(72) Inventeur: PLANQUE, Michel, 38180 Seyssins (FR); REYTIER, Magali, 38250 Villard de Lans (FR); ROUX, Guilhem, 38120 Saint-Egreve (FR)
(74) Mandataire: Nony
(86) Numéro de dépôt international: PCT/EP2015/079636
(87) Numéro de publication internationale: WO 2016/096752

(56) Documents cités:
- FR-A1- 3 000 108
- US-A1- 2003 054 210

## Description

### Domaine technique

La présente invention concerne le domaine des piles à combustibles à oxydes solides (SOFC, acronyme anglais pour « Solid Oxide Fuel Cell »), celui de l'électrolyse de l'eau à haute température (EHT, ou EVHT pour électrolyse de la vapeur d'eau à haute température, ou HTE acronyme anglais pour High Temperature Electrolysis, ou encore HTSE acronyme anglais pour High Temperature Steam Electrolysis) également à oxydes solides (SOEC, acronyme anglais pour « Solid Oxide Electrolyser Cell », et celui de la co-électrolyse à haute température de l'eau et d'un autre gaz choisi parmi le dioxyde de carbone CO₂ ou le dioxyde d'azote NO₂.

L'invention a trait plus particulièrement à la réalisation d'un nouveau module intégrant des interconnecteurs électrique et fluidique pour la distribution du courant électrique et des gaz au sein d'un réacteur d'électrolyse ou de co-électrolyse de l'eau à haute température (EHT) de type SOEC pour produire de l'hydrogène H₂ à partir de vapeur d'eau H₂O, ou d'une pile à combustible de type SOFC, et une cellule électrochimique élémentaire.

Le module selon l'invention permet un fonctionnement sous pression.

Bien que décrite en référence principalement à l'application d'électrolyse de l'eau à haute température, l'invention s'applique tout aussi bien à une co-électrolyse d'eau et d'un autre gaz choisi parmi le dioxyde de carbone CO₂ ou le dioxyde d'azote NO₂, qu'à une pile à combustible SOFC.

L'invention s'applique à une pile à combustible SOFC utilisant comme combustible soit de l'hydrogène, soit hydrocarbure, par exemple le méthane CH₄.

### Art antérieur

L'électrolyse de l'eau une réaction électrolytique qui décompose l'eau en dioxygène et dihydrogène gazeux avec l'aide d'un courant électrique selon la réaction: H₂O→H₂ + 1/2O₂.

Pour réaliser l'électrolyse de l'eau, il est avantageux de la réaliser à haute température typiquement entre 600 et 950°C, car une partie de l'énergie nécessaire à la réaction peut être apportée par la chaleur qui est moins chère que l'électricité et l'activation de la réaction est plus efficace à haute température et ne nécessite pas de catalyseur. Pour mettre en oeuvre l'électrolyse à haute température, il est connu d'utiliser un électrolyseur de type SOEC (acronyme anglais de « *Solid Oxyde Electrolyser Cell* »), constitué d'un empilement de motifs élémentaires comportant chacun une cellule d'électrolyse à oxyde solide, constituée de trois couches anode/électrolyte/cathode superposées l'une sur l'autre, et de plaques d'interconnexion en alliages métalliques aussi appelées plaques bipolaires, ou interconnecteurs. Les interconnecteurs ont pour fonction d'assurer à la fois le passage du courant électrique et la circulation des gaz au voisinage de chaque cellule (vapeur d'eau injectée, hydrogène et oxygène extrait dans un électrolyseur EHT ; air et hydrogène injectés et eau extraite dans une pile SOFC) et de séparer les compartiments anodiques et cathodiques qui sont les compartiments de circulation des gaz du côté respectivement des anodes et des cathodes des cellules. Pour réaliser l'électrolyse de la vapeur d'eau à haute température EHT, on injecte de la vapeur d'eau H₂O dans le compartiment cathodique. Sous l'effet du courant appliqué à la cellule, la dissociation des molécules d'eau sous forme vapeur est réalisée à l'interface entre l'électrode à hydrogène (cathode) et l'électrolyte: cette dissociation produit du gaz dihydrogène H₂ et des ions oxygène. Le dihydrogène est collecté et évacué en sortie de compartiment à hydrogène. Les ions oxygène O²⁻ migrent à travers l'électrolyte et se recombinent en dioxygène à l'interface entre l'électrolyte et l'électrode à oxygène (anode).

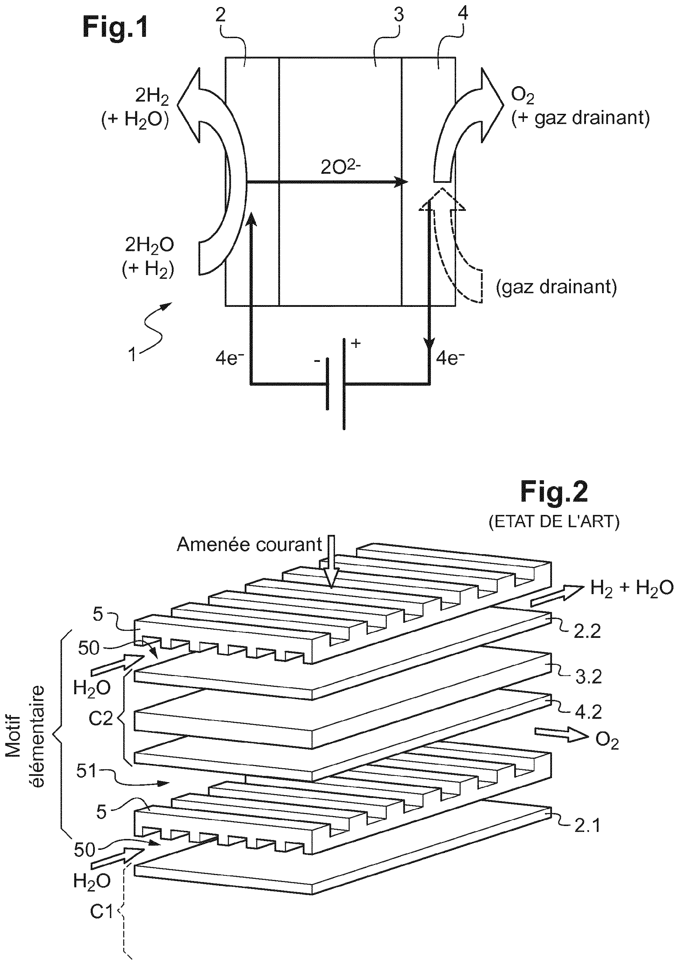

Comme schématisée en figure 1, chaque cellule d'électrolyse élémentaire 1 est formée d'une cathode 2 et d'une anode 4, placées de part et d'autre d'un électrolyte solide 3 généralement sous forme de membrane. Les deux électrodes (cathode et anode) 2,4 sont des conducteurs électriques, en matériau poreux, et l'électrolyte 3 est étanche au gaz, isolant électronique et conducteur ionique. L'électrolyte peut être en particulier un conducteur anionique, plus précisément un conducteur anionique des ions O²⁻ et l'électrolyseur est alors dénommé électrolyseur anionique.

Les réactions électrochimiques se font à l'interface entre chacun des conducteurs électroniques et le conducteur ionique.

A la cathode 2, la demi-réaction est la suivante :

2 H₂O + 4 e⁻ → 2 H₂ + 2 O²⁻.

A l'anode 4, la demi-réaction est la suivante:

2O²⁻ → O₂ + 4 e⁻.

L'électrolyte 3 intercalé entre les deux électrodes 2, 4 est le lieu de migration des ions O^{2-,} sous l'effet du champ électrique créé par la différence de potentiel imposée entre l'anode 4 et la cathode 2.

Comme illustré entre parenthèses en figure 1, la vapeur d'eau en entrée de cathode peut être accompagnée d'hydrogène H₂ et l'hydrogène produit et récupéré en sortie peut être accompagné de vapeur d'eau. De même, comme illustré en pointillés, un gaz drainant, tel que l'air peut en outre être injecté en entrée pour évacuer l'oxygène produit. L'injection d'un gaz drainant a pour fonction supplémentaire de jouer le rôle de régulateur thermique.

Un réacteur d'électrolyse élémentaire est constitué d'une cellule élémentaire telle que décrite ci-dessus, avec une cathode 2, un électrolyte 3, et une anode 4 et de deux connecteurs mono-polaires qui assurent les fonctions de distribution électrique, hydraulique et thermique.

Pour augmenter les débits d'hydrogène et d'oxygène produits, il est connu d'empiler plusieurs cellules d'électrolyse élémentaires les unes sur les autres en les séparant par des dispositifs d'interconnexion, usuellement appelés interconnecteurs ou plaques d'interconnexion bipolaires. L'ensemble est positionné entre deux plaques d'interconnexion d'extrémité qui supportent les alimentations électriques et des alimentations en gaz de l'électrolyseur (réacteur d'électrolyse).

Un électrolyseur de l'eau à haute température (EHT) comprend ainsi au moins une, généralement une pluralité de cellules d'électrolyse empilées les uns sur les autres, chaque cellule élémentaire étant formée d'un électrolyte, d'une cathode et d'une anode, l'électrolyte étant intercalé entre l'anode et la cathode.

Les dispositifs d'interconnexion fluidique et électrique qui sont en contact électrique avec une ou des électrodes assurent en général les fonctions d'amenée et de collecte de courant électrique et délimitent un ou des compartiments de circulation des gaz.

Ainsi, un compartiment dit cathodique a pour fonction la distribution du courant électrique et de la vapeur d'eau ainsi que la récupération de l'hydrogène à la cathode en contact.

Un compartiment dit anodique a pour fonction la distribution du courant électrique ainsi que la récupération de l'oxygène produit à l'anode en contact, éventuellement à l'aide d'un gaz drainant.

La figure 2 représente une vue éclatée de motifs élémentaires d'un électrolyseur de vapeur d'eau à haute température selon l'état de l'art. Cet électrolyseur EHT comporte une pluralité de cellules d'électrolyse élémentaires C1, C2... de type à oxydes solides (SOEC) empilées alternativement avec des interconnecteurs 5. Chaque cellule C1, C2... est constituée d'une cathode 2.1, 2.2,... et d'une anode 4.1, 4.2, entre lesquelles est disposé un électrolyte 3.1, 3.2.... L'ensemble des cellules d'électrolyse est alimenté en série par le courant électrique et en parallèle par les gaz.

L'interconnecteur 5 est un composant en alliage métallique qui assure la séparation entre les compartiments cathodique 50 et anodique 51, définis par les volumes compris entre l'interconnecteur 5 et la cathode adjacente 2.1 et entre l'interconnecteur 5 et l'anode adjacente 4.2 respectivement. Il assure également la distribution des gaz aux cellules. L'injection de vapeur d'eau dans chaque motif élémentaire se fait dans le compartiment cathodique 50. Le collectage de l'hydrogène produit et de la vapeur d'eau résiduelle à la cathode 2.1, 2.2 ... est effectué dans le compartiment cathodique 50 en aval de la cellule C1, C2... après dissociation de la vapeur d'eau par celle-ci. Le collectage de l'oxygène produit à l'anode 4.2 est effectué dans le compartiment anodique 51 en aval de la cellule C1, C2... après dissociation de la vapeur d'eau en ions oxygène par celle-ci.

L'interconnecteur 5 assure le passage du courant entre les cellules C1 et C2 par contact direct avec les électrodes adjacentes, c'est-à-dire entre l'anode 4.2 et la cathode 2.1.

Dans une pile à combustible à oxydes solides SOFC selon l'état de l'art, les cellules C1, C2... et interconnecteurs 5 utilisés sont les mêmes composants, mais le fonctionnement est inverse de celui d'un électrolyseur EHT tel qui vient d'être expliqué avec un sens du courant inversé, avec de l'air qui alimente les compartiments cathodiques et de l'hydrogène en tant que combustible qui alimente les compartiments anodiques.

Un fonctionnement satisfaisant d'un électrolyseur EHT nécessite entre autres les fonctions essentielles suivantes:
A/ une bonne isolation électrique entre deux interconnecteurs adjacents dans l'empilement, sous peine de court-circuiter la cellule d'électrolyse élémentaire intercalée entre les deux interconnecteurs ;
B/ une bonne étanchéité entre les deux compartiments distincts, i.e. anodique et cathodique, sous peine de recombinaison des gaz produits entraînant une baisse de rendement et surtout l'apparition de points chauds endommageant l'électrolyseur ; cela correspond à rechercher une tension initiale complète (acronyme anglais « OCV » pour Open Cell Voltage) ;
C/ une bonne distribution des gaz à la fois en entrée et en récupération des gaz produits, sous peine de perte de rendement, d'inhomogénéité de pression et de température au sein des différentes cellules élémentaires voire de dégradations rédhibitoires des cellules; cela correspond à rechercher la plus faible résistance de polarisation;
D/ un bon contact électrique et une surface de contact suffisante entre chaque cellule et interconnecteur, afin d'obtenir la plus faible résistance ohmique entre cellules et interconnecteurs.

Les hautes températures compliquent considérablement la réalisation des trois fonctions essentielles A/ à C/ précitées. En outre, la fragilité des cellules à oxydes solides impose certaines règles de conception contraignantes de manière à garantir leur intégrité mécanique.

Différentes conceptions existent déjà pour réaliser simultanément les quatre fonctions essentielles A/ à D/, mais il subsiste différentes difficultés à surmonter.

En particulier, en ce qui concerne la réalisation de la fonction B/, compte tenu des gammes de température de fonctionnement des électrolyseurs EHT et piles à combustibles SOFC élevées, typiquement 600°C à 1000°C, les joints d'étanchéités sont classiquement réalisés à base de verre ou de vitrocéramique. Un joint verre est à l'état pâteux à la température de fonctionnement.

Lors de la conception, il est nécessaire de veiller à ne pas chasser le verre sous l'effet d'un écart de pression appliquée sur le joint. Un joint en vitrocéramique subit quant à lui un cycle thermique in situ visant à le faire cristalliser et donc à le rendre solide à la température de fonctionnement. Tout comme pour le joint en verre, il faut veiller à ne pas chasser la vitrocéramique avant qu'elle ne soit solide.

La configuration la plus simple consiste à placer le verre entre deux plans denses, par opposition aux différents matériaux poreux présents dans un réacteur SOEC ou une pile à combustible SOFC : la tension de surface permet d'éviter son écoulement jusqu'à un certain différentiel de pression de part et d'autre du joint.

Pour favoriser cette tenue, il est nécessaire de réduire au mieux la hauteur du joint, d'augmenter la surface des zones en contact avec le verre et de réduire le différentiel de pression subi par le joint.

La réalisation de ce type d'étanchéités à base de verre au sein des réacteurs SOEC ou piles SOFC se heurte à plusieurs problèmes. Tout d'abord, les électrodes de part et d'autre de la cellule sont poreuses et elles ne peuvent donc pas simplement supporter de joint à base de verre. De plus, une isolation électrique entre interconnecteurs adjacentes doit être garantie, ce qu'un film de verre trop mince ne peut assurer sans risque. Enfin, ces verres doivent être écrasés pour réduire leur hauteur, mais aussi pour garantir le contact électrique entre cellule et interconnecteurs. Ce serrage doit se faire en évitant tout porte-à-faux de la cellule pour préserver son intégrité mécanique.

Dans la configuration schématisée en figure 3 et divulguée dans la demande de brevet FR3000108, une partie de ces contraintes est prise en compte par la densité des surfaces non poreuses de part et d'autre d'un joint : la cellule C1 est maintenue à plat sur son support 2.1 (cathode en EHT ou anode SOFC) et enserrée entre deux interconnecteurs adjacents 5, un premier 61 et deuxième 62 joints de type verre ou vitrocéramique, séparés d'un isolant électrique 7 pour éviter tout-circuit, sont agencés entre interconnecteurs pour permettre de réaliser l'étanchéité de l'hydrogène produit (combustible amené en SOFC) et enfin, un troisième joint 63 du même type est agencé du côté de l'anode 4.1 (cathode en SOFC) entre l'électrolyte 3.1 et l'interconnecteur 5 permettant de réaliser l'étanchéité de l'oxygène produit (ou l'air amené en SOFC). Ainsi, chaque joint 61, 62, 63 repose sur un support intrinsèquement étanche donc non poreux. De plus, une tension de surface élevée entre les joints et leur support permet d'éviter l'écoulement du verre jusqu'à un certain différentiel de pression de part et d'autre d'un joint. Pour favoriser l'obtention d'une bonne tenue mécanique du joint, il est nécessaire autant que possible de réduire la hauteur de joint et d'augmenter la surface des zones en contact avec le verre.

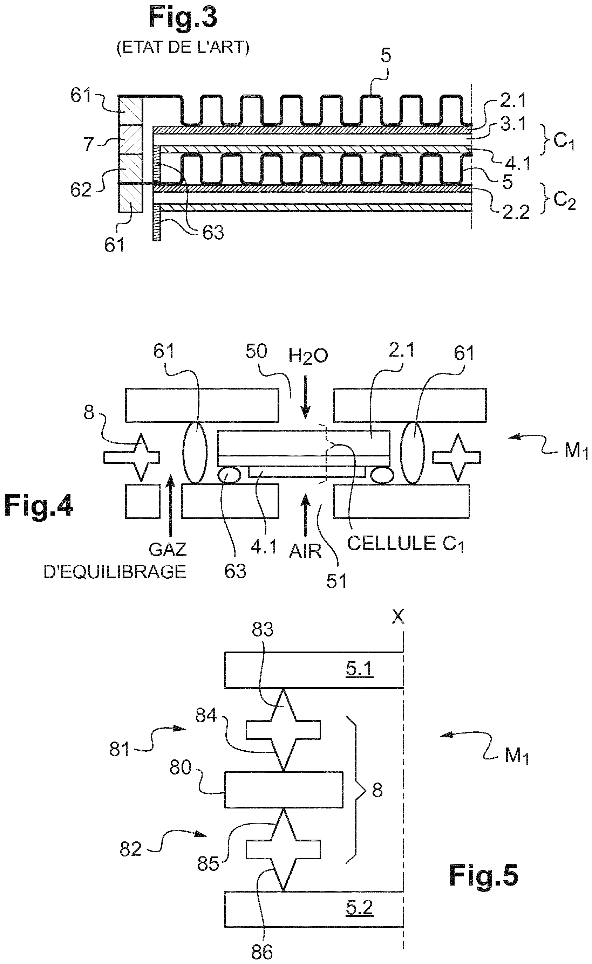

La réduction de hauteur des joints en verre ou en vitrocéramique telle qu'explicitée ci-avant est obtenue par serrage. Le serrage est en outre requis pour diminuer l'impact des résistances de contact dans l'empilement, c'est-à-dire pour assurer la fonction D/ précitée, soit un bon contact électrique entre cellule et interconnecteurs. Or, comme montré en figure 3, une cellule d'électrolyse C1, C2...est montée en porte-à-faux du fait de son joint d'étanchéité 63. Ainsi, le serrage requis pour diminuer la hauteur des joints et assurer la fonction D/ de bon contact électrique entre cellule et interconnecteurs doit en outre être réalisé sans mise en flexion rédhibitoire de la cellule qui pourrait conduire à sa rupture.

Ainsi, les configurations avec joint à base de verre ou de vitrocéramique, comme celle illustrée en figure 3, présentent des avantages indéniables d'isolation électrique et d'accommodation des déformations entre pièces d'un empilement EHT ou SOFC.

Cela étant, comme déjà évoqué, les joints à base de verre ou de vitrocéramique présentent intrinsèquement l'inconvénient majeur de ne résister qu'à de faibles différences de pression, de l'ordre de quelques centaines de millibars.

Le fonctionnement interne d'une pile SOFC ou d'un réacteur EHT sous pression, typiquement de quelques bars à quelques dizaines de bars, typiquement 30 bars, requiert alors une solution pour éviter la perte des étanchéités par les joints.

Il est déjà connu une solution qui consiste à placer le réacteur à empilement EHT ou pile SOFC au sein d'une enceinte étanche elle-même pressurisée. On peut citer ici les demandes de brevets ou brevets FR 2957361A1, US2002/0081471 et US 6689499 B2 qui divulguent ce type de solution. Cette solution connue offre l'avantage de pouvoir imposer la même pression entre l'intérieur et l'extérieur de l'empilement. Cela permet donc un fonctionnement à une pression élevée, de quelques bars à quelques dizaines de bars, sans sollicitation mécanique des joints en verre ou en vitrocéramique.

Mais, cela impose de garantir la tenue mécanique d'une enceinte pressurisée à ces pressions, typiquement 30 bars, et qui contient un empilement sous une température élevée, typiquement à 800°C avec circulation en son sein d'hydrogène H₂ et d'oxygène O₂. La gestion de la sécurité de cette enceinte à pression peut ne pas être triviale.

De plus, la présence de l'enceinte complique le maintien du serrage de l'empilement qui permet de garantir un bon contact électrique entre interconnecteurs et cellules. En particulier, le déport des organes de serrage dans une zone relativement froide n'est pas aisé.

Enfin, l'enceinte pressurisée doit être réalisée avec des passages à la fois traversants et étanches afin de réaliser l'alimentation/récupération en gaz et en courant électrique depuis l'extérieur de l'enceinte. Ainsi, ces passages doivent être isolants électriques pour certains d'entre eux et être à température contrôlée pour ceux contenant de la vapeur d'eau de manière à éviter toutes bouffées de vapeur d'eau. En effet, si on ne contrôle pas la température dans les tuyaux d'entrée et ou de sortie, la vapeur d'eau circulant en continu à l'intérieur peut rencontrer une zone froide, et alors se condenser de manière non contrôlée. Cela provoque des bouffées qui génèrent des variations d'alimentation en gaz et en pression.

Toutes ces mesures de précaution conduisent à une installation complète intégrant l'enceinte étanche pressurisée et le réacteur EHT ou la pile SOFC, qui est compliquée et coûteuse.

Il existe donc un besoin de s'affranchir des configurations existantes d'électrolyseur (EHT) de type SOEC ou de pile à combustible de type SOFC qui nécessitent la mise en oeuvre d'une enceinte étanche pressurisée logeant l'électrolyseur EHT ou la pile SOFC afin d'éviter la perte des étanchéités par les joints à base de verre ou de vitrocéramique.

Un but de l'invention est de répondre au moins en partie à ce besoin.

### Exposé de l'invention

Pour ce faire, l'invention concerne, sous une alternative, un module, destiné à former un motif élémentaire d'un réacteur d'électrolyse ou de co-électrolyse de type SOEC, comprenant:
- une cellule électrochimique élémentaire formée d'une cathode, d'une anode, et d'un électrolyte intercalé entre la cathode et l'anode,
- un premier et un deuxième dispositif formant chacun un interconnecteur électrique et fluidique, constitué chacun d'un composant en matériau conducteur électronique et étanche aux gaz; les premier et deuxième interconnecteurs étant agencés de part et d'autre de la cellule élémentaire; le premier interconnecteur étant percé d'un conduit d'amenée de la vapeur d'eau, débouchant sur la cellule du côté de la cathode et, d'un conduit de récupération de l'hydrogène produit, débouchant à la périphérie de la cellule du côté de la cathode de sorte à réaliser une distribution homogène respectivement de la vapeur d'eau amenée et de l'hydrogène produit, depuis le conduit d'amenée jusqu'au conduit de récupération; le deuxième interconnecteur étant percé d'un conduit de récupération de l'oxygène produit, débouchant à la périphérie de la cellule du côté de l'anode de sorte à réaliser une distribution homogène de l'oxygène produit jusqu'au conduit de récupération;
- un premier joint d'étanchéité agencé à la périphérie de la cellule élémentaire et en appui à la fois contre le premier interconnecteur et contre le deuxième interconnecteur;
- un deuxième joint d'étanchéité agencé à la périphérie de l'anode de la cellule élémentaire et en appui à la fois contre le deuxième interconnecteur et contre l'électrolyte; les premier et deuxième joints d'étanchéité étant à base de verre et/ou de vitrocéramique ;
- un dispositif d'isolation et d'étanchéité constitué d'une rondelle isolante électriquement enserrée par un troisième et un quatrième joints d'étanchéité sans contact l'un avec l'autre, les troisième et quatrième joints d'étanchéité étant métalliques, le dispositif étant agencé à la périphérie du premier joint d'étanchéité avec les troisième et quatrième joints en appui respectivement contre le premier et contre le deuxième interconnecteur;
module dans lequel le premier et/ou le deuxième interconnecteurs est (sont) percé(s) d'au moins un conduit d'amenée et d'au moins un conduit de récupération d'un gaz, dit gaz d'équilibrage, débouchant sur l'espace délimité entre le premier joint et le dispositif d'isolation et d'étanchéité de sorte à réaliser une distribution homogène du gaz d'équilibrage depuis son conduit d'amenée jusqu'à son conduit de récupération afin d'équilibrer les pressions de part et d'autre du premier joint d'étanchéité lors du fonctionnement en pression du réacteur.

Selon une variante, le deuxième interconnecteur est percé d'un conduit d'amenée de gaz drainant, tel que l'air, débouchant sur la cellule du côté de l'anode de sorte à réaliser une distribution homogène respectivement du gaz drainant amené et de l'oxygène produit, depuis le conduit d'amenée jusqu'au conduit de récupération.

L'invention concerne également, selon une autre alternative, un module, destiné à former un motif élémentaire d'une pile à combustible de type SOFC, comprenant:
- une cellule électrochimique élémentaire formée d'une cathode, d'une anode, et d'un électrolyte intercalé entre la cathode et l'anode,
- un premier et un deuxième dispositif formant chacun un interconnecteur électrique et fluidique, constitué chacun d'un composant; les premier et deuxième interconnecteur étant agencés de part et d'autre de la cellule élémentaire ; le premier interconnecteur étant percé d'un conduit d'amenée de combustible, débouchant sur la cellule du côté de l'anode et, d'un conduit de récupération de l'eau produite, débouchant à la périphérie de la cellule du côté de l'anode de sorte à réaliser une distribution homogène respectivement du combustible amené et de l'eau produite, depuis le conduit d'amenée jusqu'au conduit de récupération; le deuxième interconnecteur étant percé d'un conduit d'amenée d'air ou d'oxygène, débouchant sur la cellule du côté de la cathode et, d'un conduit de récupération du surplus d'air ou d'oxygène, débouchant à la périphérie de la cellule du côté de la cathode de sorte à réaliser une distribution homogène de l'air ou de l'oxygène, depuis le conduit d'amenée jusqu'au conduit de récupération;

- un premier joint d'étanchéité agencé à la périphérie de la cellule élémentaire et en appui à la fois contre le premier interconnecteur et contre le deuxième interconnecteur;
- un deuxième joint d'étanchéité agencé à la périphérie de la cathode de la cellule élémentaire et en appui à la fois contre le deuxième interconnecteur et contre l'électrolyte ; les premier et deuxième joints d'étanchéité étant à base de verre et/ou de vitrocéramique ;
- un dispositif d'isolation et d'étanchéité constitué d'une rondelle isolante électriquement enserrée par un troisième et un quatrième joints d'étanchéité sans contact l'un avec l'autre, les troisième et quatrième joints d'étanchéité étant métalliques, le dispositif étant agencé à la périphérie du premier joint d'étanchéité avec les troisième et quatrième joints en appui respectivement contre le premier et contre le deuxième interconnecteur;
module dans lequel le premier et/ou le deuxième interconnecteurs est (sont) percé(s) d'au moins un conduit d'amenée et d'au moins un conduit de récupération d'un gaz, dit gaz d'équilibrage, débouchant sur l'espace délimité entre le premier joint et le dispositif d'isolation et d'étanchéité de sorte à réaliser une distribution homogène du gaz d'équilibrage depuis son conduit d'amenée jusqu'à son conduit de récupération, afin d'équilibrer les pressions de part et d'autre du premier joint d'étanchéité lors du fonctionnement en pression de la pile.

Autrement dit, l'invention consiste essentiellement en un module comprenant un circuit de circulation d'un gaz, supplémentaire aux gaz réactifs nécessaires à la réaction d'électrolyse ou à la réaction inverse dans une pile SOFC, le circuit étant adapté pour que, lors du fonctionnement en pression, ce gaz supplémentaire vienne équilibrer sur un côté des joints d'étanchéité à base de verre et/ou de vitrocéramique la pression des gaz réactifs généré de l'autre côté.

Ainsi, on s'affranchit de la solution de mise en oeuvre d'une enceinte étanche pressurisée comme selon l'état de l'art, à l'intérieur de laquelle le réacteur EHT ou la pile SOEFC est logé(e).

La seule étanchéité qui doit résister au différentiel de pressions entre l'intérieur, typiquement comprises entre 10 et 30 bars, et l'extérieur, typiquement égale à 1 bar, du module, tout en étant isolante électrique est celle à l'extérieur de la circulation du gaz d'équilibrage, les contraintes subies par cette étanchéité étant supérieures à celles entre compartiments anodique et cathodique dans lesquelles circulent les gaz réactifs.

Selon un mode de réalisation avantageux, la cellule électrochimique élémentaire, les premier et deuxième interconnecteurs, les premier et deuxième joints d'étanchéité ainsi que le dispositif d'isolation et d'étanchéité sont de forme axisymétrique autour d'un axe central (X), les conduits d'amenée de gaz réactifs (vapeur d'eau ou de combustible), (gaz drainant, tel que l'air, ou air ou oxygène) débouchent selon l'axe central (X).

Selon une variante avantageuse, le dispositif d'étanchéité est constitué d'une rondelle isolante à section transversale carrée ou rectangulaire et de troisième et quatrième joints comportant, sur chacune de leurs faces une ou plusieurs saillies, de préférence de section transversale triangulaire, le sommet des saillies de chacun des troisième et quatrième joints étant adapté pour se déformer par appui respectivement sur la rondelle isolante et sur le premier ou sur le deuxième interconnecteur, afin d' établir l'étanchéité à la fois sur la rondelle isolante et sur chaque interconnecteur.

Le troisième et quatrième joints comportant chacun deux saillies en regard l'une de l'autre, en contact avec respectivement la rondelle et le premier ou le deuxième interconnecteur, les saillies étant adaptées pour assurer une concentration de l'effort au niveau du contact entre le joint d'étanchéité et la portée de joint, c'est-à-dire la pièce à étancher. Ainsi, les saillies permettent de réaliser l'étanchéité souhaitée sous une relativement faible charge de compression de part et d'autre des joints.

Avantageusement, le dispositif d'étanchéité est constitué d'une rondelle isolante à base d'oxyde de zirconium (zircone) et de troisième et quatrième joints étant à base d'alliage Fer-Chrome-Aluminium de type Fecralloy®.

Selon une variante de réalisation avantageuse, le premier et/ ou le deuxième interconnecteur comprend(nent) une première gorge annulaire réalisée entre le premier joint et la cellule, le conduit d'amenée du premier interconnecteur étant en communication avec la première gorge annulaire de sorte à réaliser la distribution radiale de la vapeur d'eau amenée et de l'hydrogène produit ou du combustible amené et de l'eau produite, jusqu'au conduit de récupération du premier interconnecteur.

Selon un autre variante de réalisation avantageuse, le deuxième interconnecteur comprend une deuxième gorge annulaire réalisée à l'intérieur d'une zone délimitée par le deuxième joint, le conduit d'amenée du deuxième interconnecteur étant en communication avec la deuxième gorge annulaire de sorte à réaliser la distribution radiale de l'oxygène produit ou de l'air amené, jusqu'au conduit de récupération du deuxième interconnecteur. Chacune de ces première et deuxième gorges annulaires permet d'assurer une bonne homogénéité de distribution radiale du gaz sur l'électrode concernée, quel que soit le niveau de pression.

Selon un mode de réalisation avantageux, le premier et/ou le deuxième interconnecteur comprend(ent) une troisième gorge annulaire réalisée à la périphérie des interconnecteurs et dans laquelle sont agencés le troisième ou le quatrième joints et la rondelle isolante, l'agencement étant tel que la rondelle isolante fait saillie de la troisième gorge annulaire. Cette troisième gorge annulaire permet de faciliter le montage et la tenue mécanique des trois composants du dispositif d'étanchéité. En outre, l'agencement en saillie de la rondelle isolante permet de garantir l'absence de court-circuit entre les interconnecteurs.

Selon une variante avantageuse, le premier joint d'étanchéité est constitué d'une rondelle en mica présentant des fentes à l'intérieur desquelles est déposé un cordon en verre ou en vitrocéramique remplissant les fentes du mica après serrage du module.

Selon une autre variante avantageuse, le premier joint d'étanchéité est constitué d'une rondelle en mica présentant des fentes, la rondelle en mica étant enserrée entre deux rondelles en vitrocéramique chacune en appui respectivement avec le premier et le deuxième interconnecteurs et remplissant les fentes du mica après serrage du module.

A la mise en place par serrage, le verre ou la vitrocéramique remplit les fentes du mica et assure une bonne étanchéité entre les interconnecteurs.

Avantageusement, le module comprend des éléments de contact électrique, de préférence des grilles métalliques, entre chacune des électrodes et l'un ou l'autre des interconnecteurs. De préférence, il peut s'agir d'une grille de Nickel pour le contact avec l'électrode H2/H2O et d'or ou de platine pour le contact avec l'électrode O2. Une couche de céramique de type LSM peut aussi être envisagée pour le contact avec l'électrode O2.

De préférence, le composant métallique du premier et/ou le deuxième interconnecteur est (sont) en acier ferritique à environ 20% de chrome, de préférence en CROFER® 22APU ou le F18TNb, ou à base Nickel de type Inconel® 600 ou Haynes 230®.

L'invention a également pour objet un réacteur d'électrolyse ou de co-électrolyse de type SOEC ou pile à combustible de type SOFC comportant un empilement de modules qui viennent d'être décrits.

Avantageusement, le réacteur EHT ou la pile SOFC comprend des moyens mécaniques d'assemblage des interconnecteurs entre eux adaptés pour empêcher l'ouverture des modules mais pas pour serrer par compression un interconnecteur sur l'autre. Autrement dit, ces moyens mécaniques d'assemblage interdisent l'ouverture intempestive des modules, ce qui assure une sécurité de fonctionnement mais pas le serrage par compression de la cellule entre les interconnecteurs adjacents. Le serrage, garant de l'étanchéité et du contact électrique est par ailleurs réalisé en appliquant un effort de compression bien adapté d'un interconnecteur sur l'autre. Les chaines de côtes de tous les composants du module sont déterminées pour garantir un écrasement des joints d'étanchéité du dispositif en périphérie, ainsi que celui éventuel des couches de contact électrique. Typiquement, l'écrasement réalisé par serrage est de quelques dizaines de microns. Bien entendu, on veille à ce que l'effort de serrage par compression soit ajusté lors de la montée en pression à l'intérieur du module selon l'invention.

Les moyens mécaniques d'assemblage peuvent comprendre un ou plusieurs boulons montés traversant dans des logements réalisés dans les interconnecteurs, la tête de chaque boulon traversant reposant dans un logement d'un des interconnecteurs d'extrémité de l'empilement et un écrou vissé sur le boulon traversant faisant saillie de l'autre des interconnecteurs d'extrémité de l'empilement, la tête et/ou l'écrou étant en appui directement ou indirectement sur un manchon isolant électrique monté dans au moins un des logements. Les boulons sont aisés à mettre en oeuvre et fiables pour garantir la sécurité recherchée, i.e. l'empêchement de l'ouverture des modules en fonctionnement en cas de surpression.

L'invention concerne aussi sous un autre de ses aspects un procédé de fonctionnement d'un réacteur d'électrolyse ou de co-électrolyse EHT ci-dessus, selon lequel :
- on alimente les conduits d'amenée du premier interconnecteur en vapeur d'eau ou en mélange de vapeur d'eau et un autre gaz choisi parmi le dioxyde de carbone et le dioxyde d'azote et simultanément les conduits d'amenée en gaz d'équilibrage de pression, la pression de la vapeur d'eau ou du mélange amené(e) étant sensiblement égale à celle du gaz d'équilibrage ;
- on récupère l'hydrogène ou l'hydrogène et le monoxyde de carbone ou d'azote produit(s) par électrolyse ou co-électrolyse de la vapeur d'eau, et simultanément le gaz d'équilibrage, dans leur conduit de récupération respectif.

Selon une variante avantageuse, on alimente les conduits d'amenée du deuxième interconnecteur en gaz drainant, tel que l'air, la pression du gaz drainant amené étant sensiblement égale à celle du gaz d'équilibrage, et on récupère l'oxygène produit.

L'invention concerne aussi sous un autre de ses aspects un procédé de fonctionnement d'une pile à combustible SOFC ci-dessus, selon lequel :
- on alimente les conduits d'amenée du premier interconnecteur en combustible, tel que l'hydrogène ou du méthane, et simultanément les conduits d'amenée en gaz d'équilibrage de pression;
- on alimente les conduits d'amenée du deuxième interconnecteur en air ou oxygène, la pression du combustible et de l'air ou oxygène amenés étant sensiblement égale à celle du gaz d'équilibrage ;
- on récupère le surplus de combustible, le gaz d'équilibrage, l'eau produite d'une part et le surplus d'air ou d'oxygène d'autre part, dans leur conduit de récupération respectif.

Selon une variante, on règle la température du gaz d'équilibrage de sorte que ce dernier régule la température de fonctionnement du réacteur d'électrolyse ou de co-électrolyse EHT ou de la pile à combustible SOFC.

Avantageusement, le gaz d'équilibrage est de l'air, un gaz neutre, de l'hydrogène et/ou de la vapeur d'eau.

L'air est de préférence choisi en mode de fonctionnement nominal d'un réacteur EHT ou d'une pile SOFC.

Selon une variante avantageuse, on détecte des fuites éventuelles du combustible ou des produits, alimentant ou sortant du réacteur d'électrolyse/co-électrolyse ou de la pile à combustible SOFC par analyse du débit du mélange de gaz d'équilibrage à la sortie de son conduit de récupération, puis on règle alors le débit d'air en tant que gaz d'équilibrage en entrée de son conduit d'alimentation afin de brûler les fuites détectées.

En effet, l'air permet de réduire le différentiel de pressions à moindre coût et présente en outre les avantages suivants:
- en cas de légères fuites du dispositif d'étanchéité à la périphérie du module, on peut réaliser une compensation de ces fuites par un fort débit d'air injecté au sein des interconnecteurs ;
- en cas de légères fuites du joint à base de vitrocéramique et/ou de verre qui réalise l'étanchéité du compartiment dans lequel circulent l'hydrogène, l'air injecté au sein des interconnecteurs permet de brûler l'hydrogène de fuite et ainsi d'offrir une sécurité vis-à-vis de l'atmosphère extérieure.

En brûlant les fuites, on évite tout accumulation de mélange explosif dans la le réacteur d'électrolyse/co-électrolyse ou dans la pile à combustible SOFC.

En mode de fonctionnement nominal d'un réacteur EHT ou d'une pile SOFC, notamment dû à une perte de l'étanchéité du premier joint d'étanchéité, le gaz d'équilibrage choisi est de préférence de l'hydrogène H₂ et/ou de la vapeur d'eau H₂O lorsque l'étanchéité vis-à-vis de l'extérieur du module est conservée, et un gaz neutre lorsqu'il y a une perte concomitante de l'étanchéité vis-à-vis de l'extérieur.

Ainsi, le gaz d'équilibrage selon l'invention a non seulement pour fonction de gérer le différentiel de pressions entre l'intérieur ou l'extérieur d'un réacteur EHT ou d'une pile à combustible SOFC, et donc permettre un fonctionnement fiable sous pression, mais il peut également permettre de brûler les fuites de gaz.

En outre, le gaz d'équilibrage peut avoir avantageusement un rôle de régulation thermique d'un réacteur EHT ou d'une pile à combustible SOFC.

De préférence, les cellules élémentaires électrochimiques sont de type à cathode support.

Par «cellule à cathode support », on entend ici et dans le cadre de l'invention la définition déjà donnée dans le domaine de l'électrolyse de l'eau à haute température EHT et désignée sous l'acronyme anglais CSC pour « *Cathode-supported Cell* », c'est-à-dire une cellule dans laquelle l'électrolyte et l'électrode à oxygène (anode) sont disposées sur l'électrode à hydrogène (cathode) plus épaisse qui sert donc de support.

### Description détaillée

D'autres avantages et caractéristiques de l'invention ressortiront mieux à la lecture de la description détaillée d'exemples de mise en oeuvre de l'invention faite à titre illustratif et non limitatif en référence aux figures suivantes parmi lesquelles :
- la figure 1 est une vue schématique montrant le principe de fonctionnement d'un électrolyseur d'eau à haute température,
- la figure 2 est une vue schématique en éclaté d'une partie d'un électrolyseur de vapeur d'eau à haute température (EHT) de type SOEC comprenant des interconnecteurs selon l'état de l'art,
- la figure 3 est une vue schématique en coupe partielle d'un électrolyseur EHT ou d'une pile à combustible de type SOFC selon l'état de l'art montrant la configuration des étanchéités et des contacts électriques au sein de l'empilement,
- la figure 4 est une vue schématique en coupe d'un module pour électrolyseur EHT ou pour pile à combustible de type SOFC selon un premier mode de l'invention montrant la configuration des étanchéités, des contacts électriques et de la distribution des gaz au sein de l'empilement,
- la figure 5 est une vue schématique de détail en coupe de la figure 4, montrant la configuration avantageuse du dispositif d'isolation et d'étanchéité entre l'intérieur et l'extérieur d'un module selon l'invention,
- la figure 6 est une reproduction photographique d'un dispositif d'étanchéité adapté pour réaliser l'étanchéité entre l'intérieur et l'extérieur d'un module selon l'invention,
- la figure 7A est une reproduction photographique montrant le dessous d'un interconnecteur supérieur d'un module selon l'invention, avant son assemblage avec l'interonnecteur inférieur représenté aux figures 7B et 7C,
- les figures 7B et 7C sont des reproductions photographiques montrant le dessus d'un interconnecteur inférieur d'un module selon l'invention, respectivement avant et après mise en place des étanchéités,
- les figures 8A et 8B sont des vues de simulation numérique d'un interconnecteur selon l'invention respectivement dépourvue et munie d'une gorge de distribution radiale d'un gaz réactif entre son conduit d'amenée axial et son conduit de récupération en périphérie,
- la figure 9 est une vue en éclaté d'un mode de réalisation d'un module selon l'invention pour un réacteur EHT,
- la figures 10, est une vue en coupe d'un module assemblé selon la figure 9, la coupe étant réalisée respectivement dans le plan de circulation du gaz d'équilibrage,
- la figure 11 est une vue de détail de la figure 10, montrant le passage du gaz d'équilibrage dans les gorges de logement du dispositif d'isolation et d'étanchéité entre l'intérieur et l'extérieur d'un module selon l'invention,
- les figures 12 et 13 sont des vues en coupe d'un module assemblé selon la figure 9, la coupe étant réalisée respectivement dans le plan de circulation de la vapeur d'eau amenée et de l'hydrogène produit, et dans le plan de circulation de l'air amené et l'oxygène produit,
- la figure 14 est une vue en éclaté d'un mode de réalisation d'un réacteur d'électrolyse EHT à empilement de deux modules selon l'invention,
- les figures 15, 16 et 17 sont des vues en coupe d'un module assemblé selon la figure 14, la coupe étant réalisée respectivement dans le plan de circulation de l'air amené et l'oxygène produit, dans le plan de circulation de la vapeur d'eau amenée et de l'hydrogène produit, et enfin dans le plan de circulation du gaz d'équilibrage,
- la figure 18 est une vue du dessous d'un réacteur d'électrolyse selon les figures 14 à 17.

Les figures 1 à 3 relatives à l'état de l'art ont déjà été commentées en préambule. Elles ne sont donc pas détaillées ci-après.

Par souci de clarté, les mêmes éléments d'un réacteur d'électrolyse EHT selon l'état de l'art et d'un réacteur d'électrolyse EHT selon l'invention sont désignés par les mêmes références numériques.

On précise ici dans l'ensemble de la présente demande, les termes « inférieur », « supérieur », « dessus », « dessous », « intérieur », « extérieur », « « interne » « externe» sont à comprendre par référence à un interconnecteur selon l'invention en vue de coupe transversale selon l'axe de symétrie X.

On précise également que les modules d'électrolyseurs ou de piles à combustible décrits sont de type à oxydes solides (SOEC, acronyme anglais de « *Solid Oxyde Electrolyte Cell* » ou SOFC, acronyme anglais de « *Solid Oxide Fuel Cell* ») fonctionnant à haute température. Ainsi, tous les constituants (anode/électrolyte/cathode) d'une cellule d'électrolyse ou de pile sont des céramiques. La haute température de fonctionnement d'un électrolyseur (réacteur d'électrolyse) ou d'une pile est typiquement comprise entre 600°C et 1000°C. Typiquement, les caractéristiques d'une cellule d'électrolyse élémentaire SOEC convenant à l'invention, du type cathode support (CSC), peuvent être celles indiquées comme suit dans le tableau 2 ci-dessous.

**TABLEAU 2**

| **Cellule d'électrolyse** | **Unité** | **Valeur** |
|---|---|---|
| **Cathode 2** | | |
| Matériau constitutif | | Ni-YSZ |
| Epaisseur | µm | 315 |
| Conductivité thermique | W m⁻¹ K⁻¹ | 13,1 |
| Conductivité électrique | Ω⁻¹ m⁻¹ | 10⁵ |
| Porosité | | 0,37 |
| Perméabilité | m² | 10⁻¹³ |
| Tortuosité | | 4 |
| Densité de courant | A.m⁻² | 5300 |

| **Anode 4** | | |
|---|---|---|
| Matériau constitutif | | LSM |
| Epaisseur | µm | 20 |
| Conductivité thermique | W m⁻¹ K⁻¹ | 9,6 |
| Conductivité électrique | Ω⁻¹ m⁻¹ | 1 10⁴ |
| Porosité | | 0,37 |
| Perméabilité | m² | 10⁻¹³ |
| Tortuosité | | 4 |
| Densité de courant | A.m⁻² | 2000 |

| **Electrolyte 3** | | |
|---|---|---|
| Matériau constitutif | | YSZ |
| Epaisseur | µm | |
| Résistivité | Ω m | 0,42 |

La figure 4 montre en vue de coupe schématique un module M1 destiné à former le motif élémentaire d'un électrolyseur de vapeur d'eau EHT conforme à l'invention.

Le module M1 comporte une cellule (C1) électrochimique élémentaire de forme axisymétrique autour d'un axe central X, la cellule étant formée d'une cathode, d'une anode, et d'un électrolyte intercalé entre la cathode et l'anode, deux interconnecteurs électrique et fluidique 5.1, 5.2 de part et d'autre de la cellule.

Les deux interconnecteurs 5.1, 5.2 sont réalisés chacun en une seule pièce métallique, de préférence en acier ferritique à environ 20% de chrome, de préférence en CROFER® 22APU ou le F18TNb, ou à base Nickel de type Inconel® 600 ou Haynes®.

L'interconnecteur supérieur 5.1 est percé d'un conduit 50 d'amenée de la vapeur d'eau, débouchant selon l'axe central sur la cellule du côté de la cathode. Comme expliqué par la suite, il est prévu une distribution radiale de la vapeur d'eau amenée et de l'hydrogène produit jusqu'à un conduit 59 de récupération de l'hydrogène produit, débouchant parallèlement à l'axe central à la périphérie de la cellule du côté de la cathode.

L'interconnecteur inférieur 5.2 est percé d'un conduit 51 d'amenée de gaz drainant, tel que l'air, débouchant selon l'axe central sur la cellule du côté de l'anode. Comme expliqué par la suite, il est prévu une distribution radiale de l'air amené et de l'oxygène produit jusqu'à un conduit 54 de récupération de l'oxygène produit, débouchant parallèlement à l'axe central à la périphérie de la cellule du côté de l'anode.

Un premier joint d'étanchéité 61 de forme axisymétrique autour de l'axe central X, est agencé à la périphérie de la cellule élémentaire C1 et en appui à la fois contre chacun des deux interconnecteurs. Ce joint est prévu pour réaliser l'étanchéité autour du compartiment cathodique.

Un deuxième joint d'étanchéité 63 de forme axisymétrique autour de l'axe central, est agencé à la périphérie de l'anode de la cellule élémentaire et en appui à la fois contre l'interconnecteur inférieur et contre l'électrolyte. Ce joint est prévu pour réaliser l'étanchéité autour du compartiment anodique. Les joints d'étanchéité 61 et 63 sont à base de verre et/ou de vitrocéramique, comme détaillé plus loin.

Selon l'invention, un dispositif d'isolation électrique et d'étanchéité 8 de forme axisymétrique autour de l'axe central X est agencé à la périphérie du premier joint d'étanchéité autour du compartiment cathodique.

Le dispositif 8 est constitué d'une rondelle 80 isolante électriquement formant une cale, enserrée par des troisième et quatrième joints d'étanchéité métalliques 81, 82 sans contact l'un avec l'autre. Chacun de ces troisième et quatrième joints 81, 82 est métallique et en appui respectivement contre l'interconnecteur supérieur et inférieur.

L'interconnecteur inférieur 5.2 est percé d'au moins un conduit d'amenée 58 d'un gaz, dit gaz d'équilibrage, et d'au moins un conduit de récupération 58 de ce gaz d'équilibrage débouchant sur l'espace annulaire E délimité entre le joint 61 et le dispositif 8 de sorte à réaliser une distribution annulaire du gaz d'équilibrage afin d'équilibrer les pressions de part et d'autre du premier joint d'étanchéité 61 lors du fonctionnement.

Le dispositif 8 est adapté pour résister à un différentiel de pressions important entre la pression du gaz d'équilibrage, que l'on amène à la valeur la plus proche possible de la pression de fonctionnement du réacteur EHT, typiquement de 10 à 30 bars et la pression extérieure au module, typiquement 1 bar. La rondelle isolante 80 permet d'éviter tout court-circuit entre l'interconnecteur inférieur 5.2 et l'interconnecteur supérieur 5.1. Enfin, les joints métalliques sont adaptés pour présenter des dilatations compatibles avec les matériaux des interconnecteurs, notamment les interconnecteurs à base d'acier inoxydable ferritique.

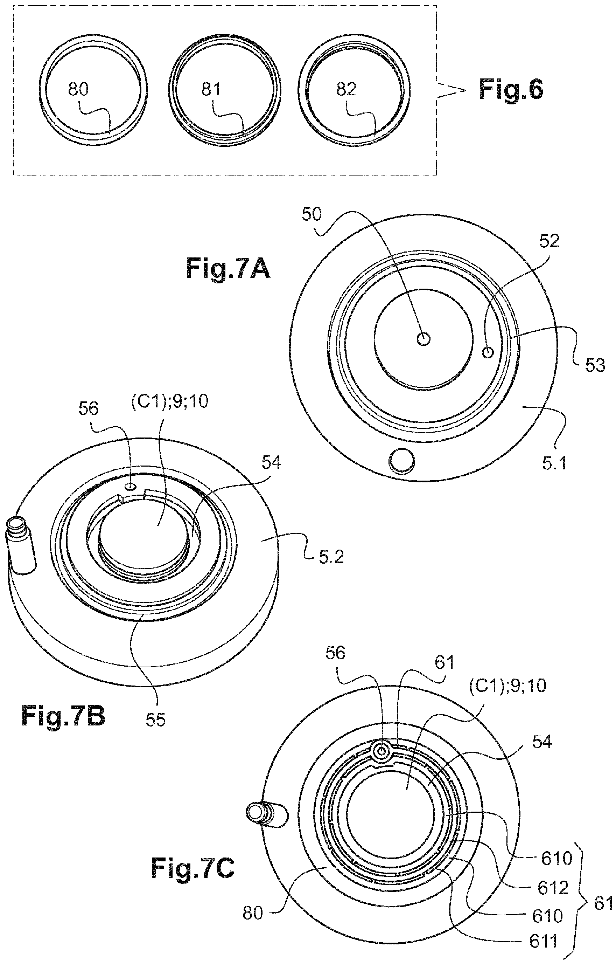

Selon une variante illustrée en figures 5 et 6, la rondelle ou cale 80 isolante est en zircone et les deux joints métalliques 81, 82 sont à base d'alliage comprenant du chrome et du fer, par exemple en Fecralloy®.

Le joint métallique supérieur 81 comporte sur chacune de ses faces une saillie 83, 84 de section transversale triangulaire.

Le joint métallique inférieur 82 est identique à celui supérieur 81 et comporte sur chacune de ses faces une saillie 85, 86 de section transversale triangulaire.

Ainsi, la forme de la section transversale de chaque joint 81, 82 qui réalise l'appui respectivement avec la rondelle 80 et l'un des interconnecteurs 5.1, 5.2 est une forme générale en losange.

Le sommet de ces saillies triangulaires 83 à 86 est adapté pour se déformer par appui respectivement sur la rondelle isolante 80 et sur le premier 5.1 ou sur le deuxième 5.2 interconnecteur, afin d'établir l'étanchéité à la fois sur la rondelle isolante et sur chaque interconnecteur. Ainsi, lors du serrage par compression d'un réacteur EHT comportant le module M1, les saillies triangulaires 83 à 86 en matériau ductile permettent de concentrer les déformations de compression, ce qui évite d'avoir une compression excessive de l'ensemble du dispositif d'isolation et d'étanchéité 8.

Cette variante permet l'établissement de l'étanchéité recherchée sous différentiel de pressions important avec une relative faible charge de compression.

Typiquement, la charge de compression est égale à une valeur de 5 à 10N/mm de joint augmentée d'une valeur de compensation de l'effet de fond dû à la pression. Cette charge de compression correspond au serrage du joint pour obtenir l'étanchéité sans pression et le maintien de ce serrage pour tous les niveaux de pression. En effet, la pression en fonctionnement va générer un effort de desserrage d'une valeur F égale à la pression multipliée par la surface du disque sur lequel s'applique la pression. Ainsi, cet effort de desserrage doit être compensé par la valeur de compensation sinon les deux interconnecteurs se séparent l'un de l'autre.

Les figures 7A à 7C et 9 à 13 montrent un mode de réalisation d'un module selon l'invention.

On précise ici que les bouchons (B) montrés sur ces figures servent à rendre étanche par soudage les percements réalisés dans les composants d'interconnecteurs pour délimiter les conduits d'amenée et de récupération des gaz. Mais, une fois les interconnecteurs finis, ils n'ont pas de fonction dans le fonctionnement d'un réacteur EHT conforme à l'invention.

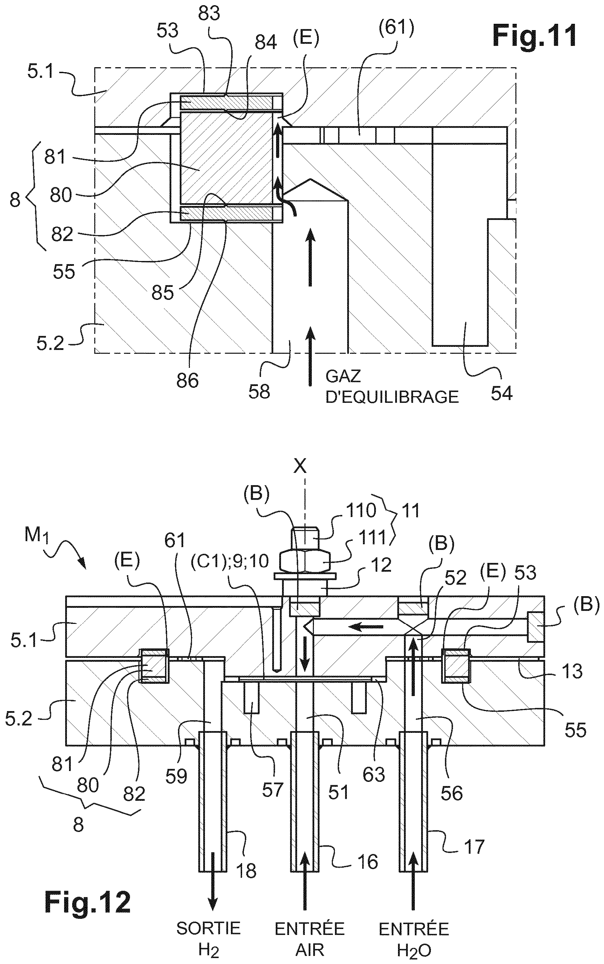

En plus de ce qui a déjà été décrit, l'interconnecteur supérieur 5.1 est percé d'un conduit d'amenée latéral 52 débouchant dans le conduit 50 d'amenée central, comme visible en figures 7A et 12. L'interconnecteur supérieur comprend également une gorge annulaire 53 pour recevoir le joint métallique supérieur 81 et la cale isolante 80 (figures 7A, 10 et 11).

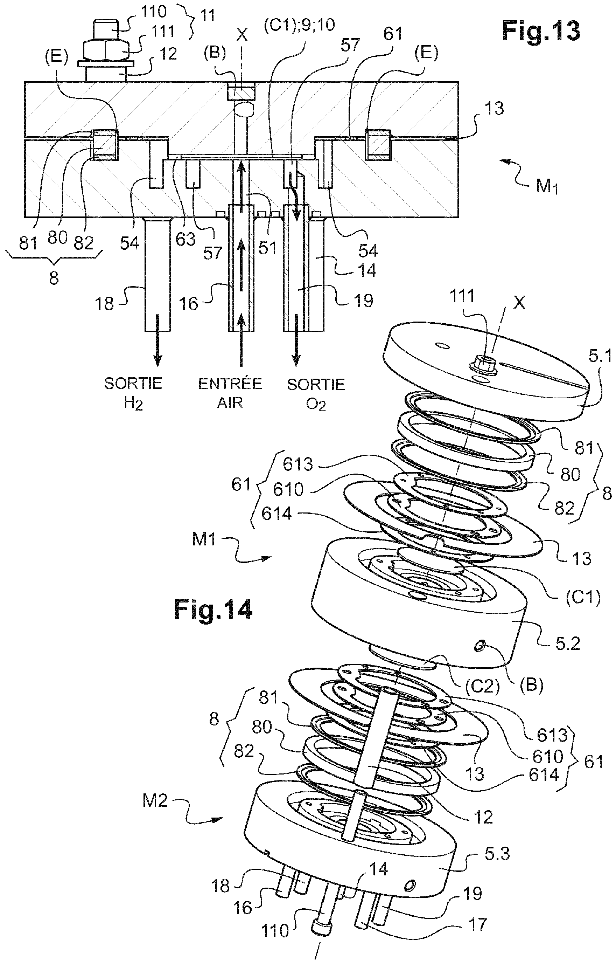

L'interconnecteur inférieur 5.2 comporte quant à lui une portée sur laquelle est positionnée à la fois le deuxième joint 63 et la cellule élémentaire. De la périphérie immédiate de la cellule vers l'extérieur, l'interconnecteur inférieur 5.2 comprend une gorge annulaire 54 pour l'écoulement radial du mélange H₂O/H₂, une surface plane et une autre gorge annulaire 55 concentrique de celle autour de la cellule pour recevoir le dispositif d'étanchéité 8. La surface plane est percée d'un conduit d'amenée latéral destiné à être en communication avec le conduit d'amenée central 51 de l'interconnecteur supérieur 5.1, comme visible en figures 7B et 13.

Comme visible en figure 7C, la surface plane de l'interconnecteur inférieur sert de support au joint 61 et autour du conduit d'amenée latéral 56. Sur cette figure 7C, on voit que le joint 61 comprend de préférence une rondelle ou couronne en mica 610 présentant des fentes 611 dans laquelle un cordon en verre ou en vitrocéramique 612 est réalisé. Lors du serrage, ce cordon en verre ou en vitrocéramique 612 va couler dans les fentes 611 et ainsi créer une liaison bien adhérente entre les deux interconnecteurs 5.1 et 5.2 qui est en outre calée latéralement par la couronne en mica 610.

Comme visible en figure 14, en lieu et place d'un cordon 612 pénétrant dans les fentes 611, on peut envisager d'enserrer la couronne en mica 610 entre deux rondelles ou couronnes 613, 614 en vitrocéramique par ailleurs chacune en appui respectivement avec le premier 5.1 et le deuxième 5.2 interconnecteurs.

Enfin, sur cette figure 7C, on voit également que la rondelle isolante 80 fait saillie de l'interconnecteur inférieur 5.2, lorsque logée dans la gorge annulaire 55 de ce dernier.

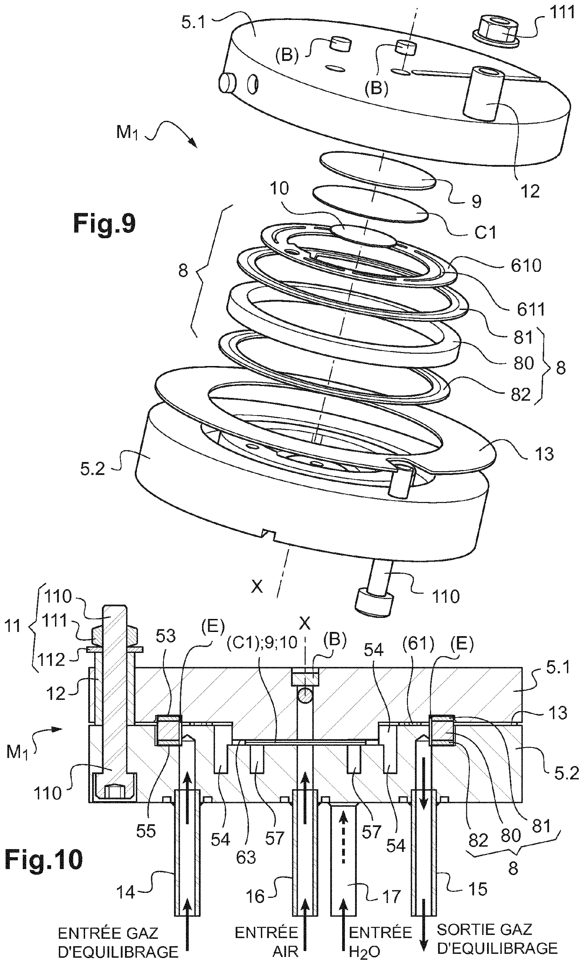

Comme visible aux figures 10 et 11, l'interconnecteur inférieur est percé d'une gorge annulaire 55 débouchant dans les conduits d'amenée 58 et de récupération 58 du gaz d'équilibrage.

Chacun de ces conduits d'amenée 58 et de récupération 58 du gaz d'équilibrage débouche dans la gorge 55 de logement du dispositif d'étanchéité 8 (figures 10 et 11). Selon l'invention, on prévoit un jeu de montage latéral du dispositif d'étanchéité 8 dans les gorges 53, 55 respectivement de l'interconnecteur supérieur 5.1 et inférieur 5.2, qui est suffisant pour permettre le passage du gaz d'équilibrage dans l'espace annulaire (E) ainsi défini entre dispositif 8 et l'intérieur des gorges 53, 55. Comme on peut le voir en détail en figure 11, c'est le passage réalisé en fond de perçage du conduit d'amenée 58 à l'intérieur du dispositif d'étanchéité 8 qui permet l'arrivée du gaz d'équilibrage dans l'espace annulaire (E) et ainsi d'assurer la distribution annulaire de ce dernier. En quelque sorte, cette distribution annulaire du gaz d'équilibrage forme un rideau périphérique de gaz autour des compartiments de gaz réactifs, ce qui permet d'équilibrer les pressions.

Grâce à la présence des gorges 54, 57 de distribution des gaz réactifs sur l'interconnecteur inférieur 5.2, le module selon l'invention avec les deux interconnecteurs et la cellule en géométrie axisymétrique autour de l'axe X permet une alimentation homogène et radiale de la cellule en gaz réactifs quel que soit le niveau de pression.

Pour démontrer les avantages en fonctionnement d'un module M1 selon l'invention avec ces gorges comparativement à un module sans ces gorges, les inventeurs ont procédé à l'aide d'un logiciel du commerce, par exemple le logiciel dénommé « Fluent », à des simulations pour calculer l'homogénéité de distribution de gaz sur la cathode d'une cellule d'électrolyse.

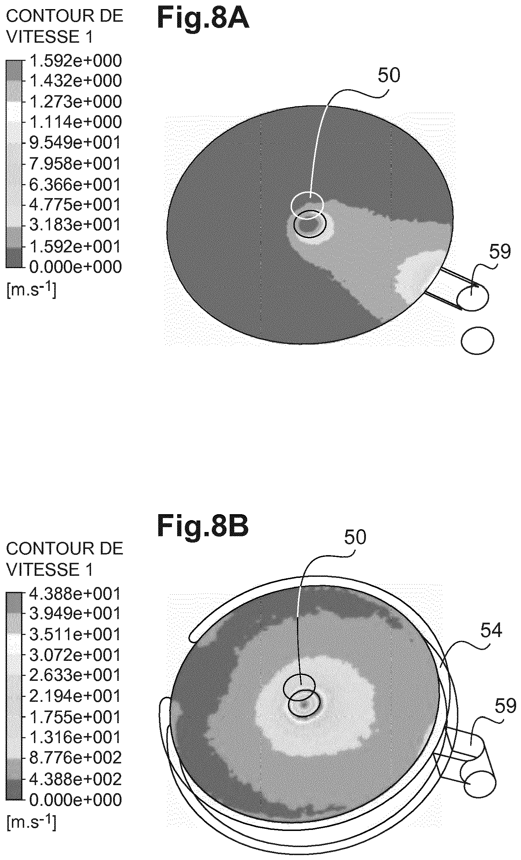

Les figures 8A et 8B illustrent ces simulations par la vitesse d'écoulement respectivement sans et avec la gorge annulaire 54. On précise que les conditions d'entrée simulaient une vitesse d'écoulement dans le conduit d'amenée 50 pour un mélange à 90% d'H₂O et 10% d'H₂, à débit égal à 3,7 Nml/min, sous une pression de 15 bars et à 800°C.

Il ressort de ces figures qu'il est nécessaire d'introduire suffisamment de pertes de charge en amont du conduit de récupération 59 afin de garantir un écoulement homogène et radial. En effet, sur la figure 7A, on voit nettement que sans gorge, le mélange H₂O/H₂ n'alimente que la zone de cellule comprise entre le conduit d'amenée central 50 et le conduit de sortie latéral 59. A contrario, avec une gorge 54 en périphérie, l'axisymétrie de la distribution sur la cellule est bien conservée.

Comme illustré en figure 9, le module M1 selon l'invention peut comporter avantageusement des grilles de contact électrique 9, 10 qui peuvent notamment avoir pour effet de compenser des défauts de planéité afin d'obtenir un meilleur contact électrique entre d'une part l'interconnecteur supérieur et la cathode et d'autre part entre l'interconnecteur inférieur et l'anode.

Avantageusement, comme visible en figure 9, le module M1 peut comprendre, à la périphérie du dispositif d'isolation et d'étanchéité 8, une couronne 13 isolante électriquement, du type en mica, la couronne 13 venant en appui sur toutes les zones où les deux surfaces périphériques des interconnecteurs 5.1 et 5.2 sont en regard l'une de l'autre.

On a représenté aux figures 14 à 18, un réacteur d'électrolyse EHT comportant deux modules M1, M2 réalisés chacun comme celui décrit précédemment, empilés l'un sur l'autre.

Dans ce réacteur, l'interconnecteur inférieur 5.2 du module supérieur M1 et l'interconnecteur supérieur 5.2 du module inférieur M2 sont réalisés dans le même composant en alliage métallique.

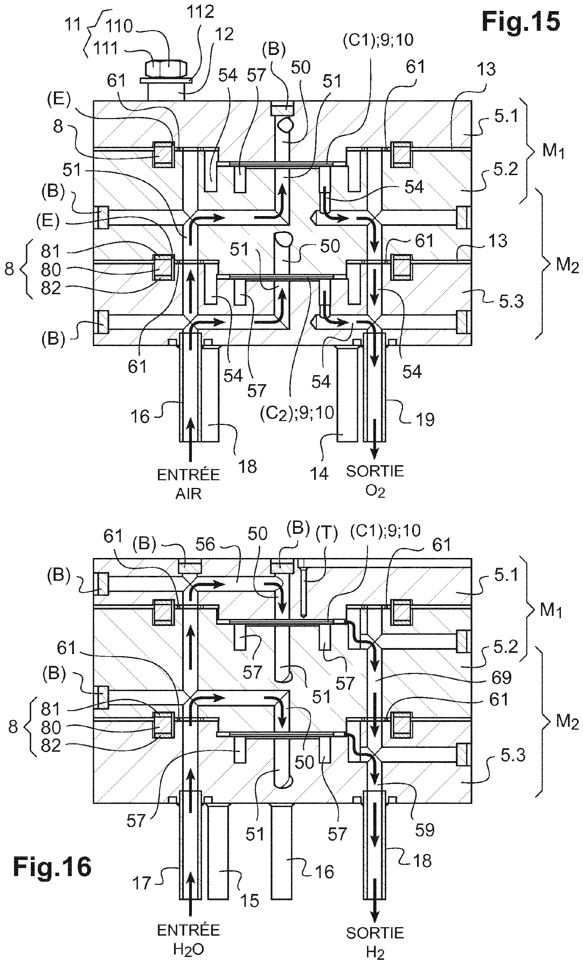

Comme on peut le voir sur les figures 15 et 16, les différents perçages verticaux et horizontaux au travers des interconnecteurs 5.1 à 5.3 superposés, permettent de réaliser à la périphérie puis selon l'axe central X les conduits d'amenée respectivement d'air 51 (figure 15) et de vapeur d'eau 56, 50 (figure 16), et à la périphérie pour les conduits de récupération respectivement 54 de l'oxygène produit et 59 de l'hydrogène, pour chaque cellule d'électrolyse C1, C2.

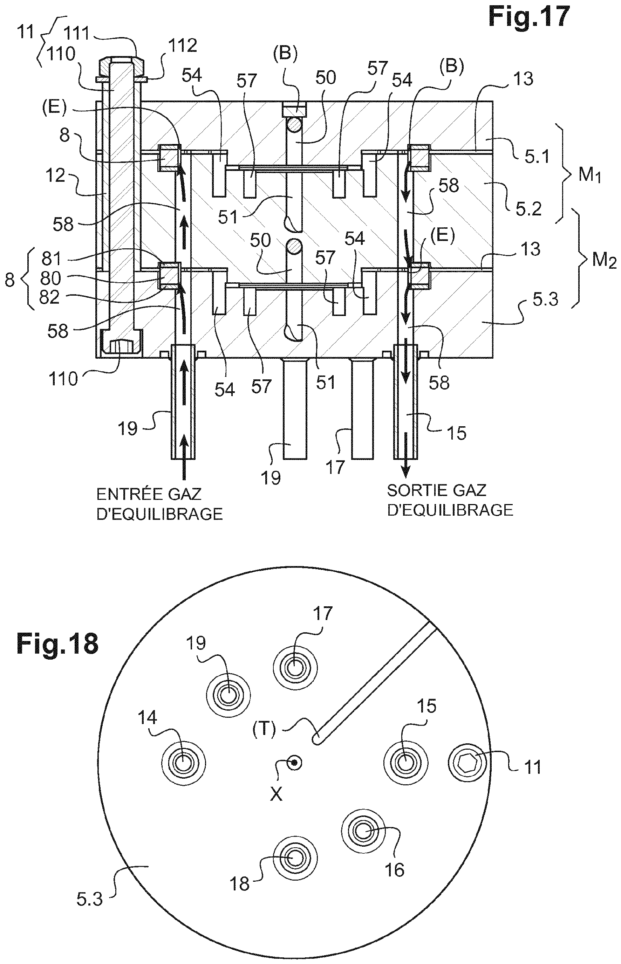

Comme on peut le voir sur la figure 17, les différents perçages verticaux au travers des interconnecteurs 5.1 à 5.3 superposés, permettent de réaliser à la périphérie les conduits d'amenée et de récupération 58 du gaz d'équilibrage autour de chaque cellule d'électrolyse C1, C2.

Selon un mode de réalisation avantageux, le module ou le réacteur selon l'invention intègre un boulon 11 monté traversant dans des logements réalisés dans les interconnecteurs. Comme visible en figures 10 et 17, la tête 110 du boulon 11 traversant repose dans un logement d'un interconnecteur d'extrémité 5.2 ou 5.3 et un écrou 111 vissé sur le boulon traversant fait saillie sur l'autre interconnecteur d'extrémité 5.1, l'écrou 111 étant en appui indirectement par le biais d'une rondelle 112 sur un manchon 12 isolant électrique monté dans le logement de l'interconnecteur supérieur 5.2 ou 5.1. Le boulon 11 interdit l'ouverture intempestive de chaque module lors du fonctionnement sous pression, ce qui assure une sécurité de fonctionnement mais pas le serrage par compression de chaque cellule entre les interconnecteurs. Le serrage, garant de l'étanchéité et du contact électrique est par ailleurs réalisé en appliquant un effort de compression bien adapté d'un interconnecteur sur l'autre. Les chaines de côtes de tous les composants des modules sont déterminées pour garantir un écrasement des joints d'étanchéité 81, 82 en périphérie, ainsi que celui éventuel des grilles de contact électrique 9, 10. Typiquement, l'écrasement réalisé par serrage est de quelques dizaines de microns. Bien entendu, on veille à ce que l'effort de serrage par compression soit ajusté lors de la montée en pression à l'intérieur du module selon l'invention.

Enfin, plusieurs tuyaux sont connectés aux différents conduits d'amenée et de récupération des gaz réalisés dans les interconnecteurs de la façon suivante :
- un tuyau d'amenée latérale 14 du gaz d'équilibrage est connecté sur le conduit d'amenée latérale 58 de l'interconnecteur inférieur 5.2 ou 5.3, tandis qu'un tuyau de récupération 15 du gaz d'équilibrage est connecté sur le conduit de récupération latérale 58 de l'interconnecteur inférieur (figures 10, 17 et 18) ;
- un tuyau d'amenée centrale de l'air 16 est connecté sur le conduit d'amenée central de l'interconnecteur inférieur 5.2 ou 5.3 (figures 12, 13, 15 et 18), tandis qu'un tuyau de récupération 19 de l'oxygène produit est connecté sur la gorge annulaire 57 de l'interconnecteur inférieur 5.2 ou 5.3 (figures 12, 13, 15 et 18) ;
- un tuyau d'amenée centrale de la vapeur d'eau 17 est connecté sur le conduit d'amenée latéral de l'interconnecteur inférieur 5.2 ou 5.3 lui-même débouchant sur celui de l'interconnecteur supérieur 5.1 (figures 13, 16 et 18), tandis qu'un tuyau de récupération 18 de l'hydrogène produit est connecté sur le conduit de récupération latérale 59 de l'interconnecteur inférieur (figures 13, 16 et 18).

On décrit maintenant le fonctionnement d'un réacteur d'électrolyse EHT comprenant plusieurs modules selon l'invention qui viennent d'être décrits, les modules étant empilés les uns sur les autres, comme celui représenté aux figures 14 à 18.

On alimente le tuyau 17 en vapeur d'eau et donc les conduits d'amenée en vapeur d'eau 56, 52 et 50 et simultanément le tuyau 14 en gaz d'équilibrage et donc le conduit d'amenée 58 et l'espace annulaire E, la pression de la vapeur d'eau amenée étant sensiblement égale à celle du gaz d'équilibrage.

Simultanément également, on alimente le tuyau 16 en air, en tant que gaz drainant, et donc le conduit d'amenée 51, la pression de l'air amené étant sensiblement égale à celle du gaz d'équilibrage.

La vapeur d'eau distribuée radialement depuis le conduit d'amenée 50 et l'hydrogène produit par l'électrolyse de la vapeur d'eau, circule dans la gorge annulaire 54 puis est récupéré radialement dans le conduit de récupération 59 et donc par le tuyau de récupération 18 (figures 12 et 16).

Le gaz d'équilibrage circule dans l'espace annulaire E et est récupéré dans le conduit de récupération 58 et donc par le tuyau de récupération 15 (figures 10 et 17).

L'air distribué radialement depuis le conduit d'amenée 51 et l'oxygène produit par l'électrolyse de la vapeur d'eau circule radialement dans la gorge annulaire 57 puis est récupéré par le tuyau de récupération 19 (figures 13 et 15).

Dans le module M1 ou le réacteur à empilement de modules M1, M2 selon l'invention, aucun courant d'alimentation ne traverse l'ensemble des tuyaux 14 à 19.

D'autres variantes et avantages de l'invention peuvent être réalisés sans pour autant sortir du cadre de l'invention.

Par exemple, on peut prévoir de percer l'un ou l'autre des deux interconnecteurs d'un module pour y faire passer des moyens d'instrumentation, tels qu'un thermocouple (T) comme montré en figure 12.

Bien que décrite pour une électrolyse de l'eau à haute température, le module M1 selon l'invention ou le réacteur à empilement de modules M1, M2 peut tout aussi bien être utilisé pour une co-électrolyse de vapeur d'eau mélangée soit avec du dioxyde de carbone soit du dioxyde d'azote.

Bien que décrite pour une électrolyse de l'eau à haute température, le module M1 selon l'invention ou le réacteur à empilement de modules M1, M2 peut tout aussi bien être utilisé en tant que pile à combustible SOFC. Dans ce cas, on alimente les tuyaux d'amenée 17 en combustible, par exemple en hydrogène ou méthane, on alimente toujours les tuyaux 14 en gaz d'équilibrage et on alimente les tuyaux 16 en air ou en oxygène.

L'invention n'est pas limitée aux exemples qui viennent d'être décrits ; on peut notamment combiner entre elles des caractéristiques des exemples illustrés au sein de variantes non illustrées.

## Revendications

1. Module, destiné à former un motif élémentaire d'un réacteur d'électrolyse ou de co-électrolyse de type SOEC, comprenant:
- une cellule (C1) électrochimique élémentaire formée d'une cathode (2.1), d'une anode (4.1), et d'un électrolyte (3.1) intercalé entre la cathode et l'anode,
- un premier (5.1) et un deuxième (5.2) dispositif formant chacun un interconnecteur électrique et fluidique, constitué chacun d'un composant en matériau conducteur électronique et étanche aux gaz; les premier et deuxième interconnecteurs étant agencés de part et d'autre de la cellule élémentaire; le premier interconnecteur (5.1) étant percé d'un conduit d'amenée de la vapeur d'eau (50), débouchant sur la cellule du côté de la cathode (2.1) et, d'un conduit de récupération de l'hydrogène produit (59), débouchant à la périphérie de la cellule du côté de la cathode de sorte à réaliser une distribution homogène respectivement de la vapeur d'eau amenée et de l'hydrogène produit, depuis le conduit d'amenée jusqu'au conduit de récupération; le deuxième interconnecteur (5.2) étant percé d'un conduit de récupération de l'oxygène produit (57), débouchant à la périphérie de la cellule du côté de l'anode (4.1) de sorte à réaliser une distribution homogène de l'oxygène produit jusqu'au conduit de récupération;
- un premier joint d'étanchéité (61) agencé à la périphérie de la cellule élémentaire et en appui à la fois contre le premier interconnecteur et contre le deuxième interconnecteur;
- un deuxième joint d'étanchéité (63) agencé à la périphérie de l'anode de la cellule élémentaire et en appui à la fois contre le deuxième interconnecteur et contre l'électrolyte ; les premier et deuxième joints d'étanchéité étant à base de verre et/ou de vitrocéramique ;
- un dispositif d'isolation et d'étanchéité (8) constitué d'une rondelle isolante électriquement (80) enserrée par un troisième (81) et un quatrième (82) joints d'étanchéité sans contact l'un avec l'autre, les troisième et quatrième joints d'étanchéité étant métalliques, le dispositif étant agencé à la périphérie du premier joint d'étanchéité avec les troisième et quatrième joints en appui respectivement contre le premier et contre le deuxième interconnecteur;
module dans lequel le premier et/ou le deuxième interconnecteurs est (sont) percé(s) d'au moins un conduit d'amenée (58) et d'au moins un conduit de récupération d'un gaz, dit gaz d'équilibrage, débouchant chacun sur l'espace annulaire (E) délimité entre le premier joint (61) et le dispositif d'isolation et d'étanchéité (8) de sorte à réaliser une distribution homogène du gaz d'équilibrage depuis son conduit d'amenée jusqu'à son conduit de récupération, afin d'équilibrer les pressions de part et d'autre du premier joint d'étanchéité lors du fonctionnement en pression du réacteur.

2. Module selon la revendication 1, le deuxième interconnecteur (5.2) étant percé d'un conduit d'amenée de gaz drainant (51), tel que l'air, sur la cellule du côté de l'anode de sorte à réaliser une distribution homogène respectivement du gaz drainant amené et de l'oxygène produit, depuis le conduit d'amenée (51) jusqu'au conduit de récupération (57).

3. Module, destiné à former un motif élémentaire d'une pile à combustible de type SOFC, comprenant:
- une cellule (C1) électrochimique élémentaire formée d'une cathode (2), d'une anode (4), et d'un électrolyte (3) intercalé entre la cathode et l'anode,
- un premier (5.1) et un deuxième (5.2) dispositif formant chacun un interconnecteur électrique et fluidique, constitué chacun d'un composant en matériau conducteur électronique et étanche aux gaz ; les premier et deuxième interconnecteur étant agencés de part et d'autre de la cellule élémentaire ; le premier interconnecteur étant percé d'un conduit d'amenée de combustible (50), débouchant sur la cellule du côté de l'anode (4.1) et, d'un conduit de récupération de l'eau produite, à la périphérie de la cellule du côté de l'anode de sorte à réaliser une distribution homogène respectivement du combustible amené et de l'eau produite, depuis le conduit d'amenée jusqu'au conduit de récupération; le deuxième interconnecteur étant percé d'un conduit d'amenée d'air ou d'oxygène, débouchant sur la cellule du côté de la cathode (2.1) et, d'un conduit de récupération du surplus d'air ou d'oxygène, débouchant à la périphérie de la cellule du côté de la cathode de sorte à réaliser une distribution homogène de l'air ou de l'oxygène, depuis le conduit d'amenée jusqu'au conduit de récupération;
- un premier joint d'étanchéité (61) agencé à la périphérie de la cellule élémentaire et en appui à la fois contre le premier interconnecteur et contre le deuxième interconnecteur;
- un deuxième joint d'étanchéité (63) agencé à la périphérie de la cathode de la cellule élémentaire et en appui à la fois contre le deuxième interconnecteur et contre l'électrolyte ; les premier et deuxième joints d'étanchéité étant à base de verre et/ou de vitrocéramique ;
- un dispositif d'isolation et d'étanchéité (8) constitué d'une rondelle isolante électriquement (80) enserrée par un troisième (81) et un quatrième (82) joints d'étanchéité sans contact l'un avec l'autre, les troisième et quatrième joints d'étanchéité étant métalliques, le dispositif étant agencé à la périphérie du premier joint d'étanchéité avec les troisième et quatrième joints en appui respectivement contre le premier et contre le deuxième interconnecteur;
module dans lequel le premier et/ou le deuxième interconnecteurs est (sont) percé(s) d'au moins un conduit d'amenée (58) et d'au moins un conduit de récupération (58) d'un gaz, dit gaz d'équilibrage, débouchant sur l'espace annulaire (E) délimité entre le premier joint (61) et le dispositif d'isolation et d'étanchéité (8) de sorte à réaliser une distribution homogène du gaz d'équilibrage depuis son conduit d'amenée jusqu'à son conduit de récupération, afin d'équilibrer les pressions de part et d'autre du premier joint d'étanchéité lors du fonctionnement en pression de la pile.

4. Module selon l'une des revendications précédentes, le premier et/ ou le deuxième interconnecteur comprenant une première gorge (54) réalisée entre le premier joint (61) et la cellule (C1), le conduit d'amenée (50) du premier interconnecteur étant en communication avec la première gorge (54) de sorte à réaliser la distribution homogène de la vapeur d'eau amenée et de l'hydrogène produit ou du combustible amené et de l'eau produite, jusqu'au conduit de récupération du premier interconnecteur.

5. Module selon l'une des revendications précédentes, le deuxième interconnecteur (5.2) comprenant une deuxième gorge (57) réalisée à l'intérieur d'une zone délimitée par le deuxième joint (63), le conduit d'amenée (51) du deuxième interconnecteur étant en communication avec la deuxième gorge (57) de sorte à réaliser la distribution homogène de l'oxygène produit ou de l'air amené, jusqu'au conduit de récupération (58) du deuxième interconnecteur.

6. Module selon l'une des revendications précédentes, le premier et/ ou le deuxième interconnecteur comprenant une troisième gorge (53, 55) réalisée à la périphérie des interconnecteurs et dans laquelle sont agencés le troisième (81) ou le quatrième (82) joints et la rondelle isolante (80), l'agencement étant tel que la rondelle isolante fait saillie de la troisième gorge (53, 55).

7. Module selon l'une des revendications précédentes, la cellule électrochimique élémentaire (C1), les premier (5.1) et deuxième (5.2) interconnecteurs, les premier (61) et deuxième (63) joints d'étanchéité ainsi que le dispositif d'isolation et d'étanchéité (8) étant de forme axisymétrique autour d'un axe central (X), les conduits d'amenée de gaz réactifs (50) (vapeur d'eau ou de combustible) et (51) (gaz drainant (51), tel que l'air, ou d'air ou oxygène) débouchant selon l'axe central (X).

8. Module selon l'une des revendications précédentes, le dispositif d'étanchéité étant constitué d'une rondelle isolante (80) à section transversale carrée ou rectangulaire et de troisième (81) et quatrième joints (82) comportant, sur chacune de leurs faces une ou plusieurs saillies, de préférence de section transversale triangulaire, le sommet des saillies étant adapté pour se déformer par appui respectivement sur la rondelle isolante et sur le premier ou sur le deuxième interconnecteur, afin d'établir l'étanchéité à la fois sur la rondelle isolante et sur chaque interconnecteur.

9. Module selon l'une des revendications 1 à 8, le dispositif d'étanchéité étant constitué d'une rondelle isolante (80) à base d'oxyde de zirconium (zircone) et de troisième (81) et quatrième (82) joints à base d'alliage Fer-Chrome-Aluminium.

10. Réacteur d'électrolyse ou de co-électrolyse EHT, de type SOEC comportant un empilement d'une pluralité de modules (M1, M2) selon l'une des revendications 1 à 2 et 4 à 10.

11. Pile à combustible de type SOFC comportant un empilement d'une pluralité de modules (M1, M2) selon l'une des revendications 3 à 10.

12. Procédé de fonctionnement d'un réacteur d'électrolyse ou de co-électrolyse EHT selon la revendication 10 selon lequel :
- on alimente les conduits d'amenée (50) du premier interconnecteur (5.1) en vapeur d'eau ou en mélange de vapeur d'eau et un autre gaz choisi parmi le dioxyde de carbone et le dioxyde d'azote et simultanément les conduits d'amenée (58) en gaz d'équilibrage, la pression de la vapeur d'eau ou du mélange amené(e) étant sensiblement égale à celle du gaz d'équilibrage ;
- on récupère l'hydrogène ou l'hydrogène et le monoxyde de carbone ou d'azote produit(s) par électrolyse ou co-électrolyse de la vapeur d'eau et simultanément le gaz d'équilibrage, dans leur conduit de récupération respectif (59, 58).

13. Procédé de fonctionnement d'une pile à combustible SOFC selon la revendication 11 selon lequel :
- on alimente les conduits d'amenée du premier interconnecteur en combustible, tel que l'hydrogène ou du méthane, et simultanément les conduits d'amenée en gaz d'équilibrage;
- on alimente les conduits d'amenée du deuxième interconnecteur en air ou oxygène, la pression du combustible et de l'air ou oxygène amenés étant sensiblement égale à celle du gaz d'équilibrage ;
- on récupère le surplus de combustible, le gaz d'équilibrage, l'eau produite d'une part et le surplus d'air ou d'oxygène d'autre part, dans leur conduit de récupération respectif.

14. Procédé de fonctionnement selon l'une des revendications 12 ou 13, selon lequel on règle la température du gaz d'équilibrage de sorte que ce dernier régule la température de fonctionnement du réacteur d'électrolyse ou de co-électrolyse EHT ou de la pile à combustible SOFC.

15. Procédé de fonctionnement selon l'une des revendications 12 à 14, selon lequel :
- on détecte des fuites éventuelles du combustible ou des produits, alimentant ou sortant du réacteur d'électrolyse/co-électrolyse ou de la pile à combustible SOFC par analyse du débit du mélange de gaz d'équilibrage à la sortie de son conduit de récupération (58), puis
- on règle alors le débit d'air en tant que gaz d'équilibrage en entrée de son conduit d'alimentation afin de brûler les fuites détectées.

## Patentansprüche

1. Modul, das dazu bestimmt ist, eine Einheitszelle eines Elektrolyse- oder einer Co-Elektrolysereaktors vom Typ SOEC zu bilden, das Folgendes umfasst:
- eine elektrochemische Einheitszelle (C1), die aus einer Kathode (2.1), einer Anode (4.1) und einem Elektrolyt (3.1), der zwischen die Kathode und die Anode eingefügt ist, gebildet ist,
- eine erste (5.1) und eine zweite (5.2) Vorrichtung, die jeweils eine elektrische und fluidische Zwischenverbindung bilden, die jeweils aus einem Bauteil aus elektronischem leitfähigem und gasdichtem Material bestehen; wobei die erste und zweite Zwischenverbindung auf jeweils einer Seite der Einheitszelle gebildet sind; wobei die erste Zwischenverbindung (5.1) von einer Zuführleitung von Wasserdampf (50) durchstoßen ist, die auf der Zelle auf der Seite der Kathode (2.1) mündet, und von einer Rückgewinnungsleitung des erzeugten Wasserstoffs (59), die an dem Umfang der Zelle auf der Seite der Kathode derart mündet, dass eine homogene Verteilung jeweils des zugeführten Wasserdampfs und des erzeugten Wasserstoffs von der Zuführleitung bis zu der Rückgewinnungsleitung hergestellt wird; wobei die zweite Zwischenverbindung (5.2) mit einer Rückgewinnungsleitung des erzeugten Sauerstoffs (57) durchstoßen ist, die an dem Umfang der Zelle auf der Seite der Anode (4.1) derart mündet, dass eine homogene Verteilung des erzeugten Sauerstoffs bis zu einer Rückgewinnungsleitung hergestellt wird;
- eine erste Dichtung (61), die an dem Umfang der Einheitszelle eingerichtet ist und sowohl gegen die erste Zwischenverbindung als auch gegen die zweite Zwischenverbindung anliegt;
- eine zweite Dichtung (63), die an dem Umfang der Anode der Einheitszelle eingerichtet ist und sowohl gegen die zweite Zwischenverbindung als auch gegen den Elektrolyt anliegt; wobei die erste und die zweite Dichtung auf der Basis von Glas und/oder Glaskeramik sind;
- eine Vorrichtung zur Isolation und Abdichtung (8), die aus einer elektrisch isolierenden Scheibe (80) besteht, die von einer dritten (81) und einer vierten (82) Dichtung ohne Berührung miteinander eingespannt ist, wobei die dritte und vierte Dichtung metallisch sind, wobei die Vorrichtung an dem Umfang der ersten Dichtung mit der dritten und vierten Dichtung jeweils in Auflage gegen die erste und gegen die zweite Zwischenverbindung eingerichtet ist;
Modul, bei dem die erste und/oder die zweite Zwischenverbindung von mindestens einer Zuführleitung (58) und mindestens einer Rückgewinnungsleitung eines Gases, Ausgleichsgas genannt, durchstoßen ist/sind, die jeweils auf den Ringraum (E) mündet, der zwischen der ersten Dichtung (61) und der Isolations- und Abdichtvorrichtung (8) derart abgegrenzt ist/sind, dass eine homogene Verteilung des Ausgleichsgases ausgehend von seiner Zuführleitung bis zu seiner Rückgewinnungsleitung hergestellt wird, um die Drücke auf jeder Seite der ersten Dichtung beim Betrieb des Reaktors unter Druck auszugleichen.

2. Modul nach Anspruch 1, wobei die zweite Zwischenverbindung (5.2) von einer Zuführleitung von Dränagegas (51), wie Luft, auf der Zelle auf der Seite der Anode derart durchstoßen ist, dass eine homogene Verteilung jeweils des zugeführten Dränagegases und des erzeugten Sauerstoffs von der Zuführleitung (51) bis zur Rückgewinnungsleitung (57) hergestellt wird.

3. Modul, das dazu bestimmt ist, eine Einheitszelle einer Brennstoffzelle vom Typ SOFC zu bilden, das Folgendes umfasst:
- eine elektrochemische Einheitszelle (C1), die aus einer Kathode (2), einer Anode (4) und einem Elektrolyt (3), der zwischen die Kathode und die Anode eingefügt ist, gebildet ist,
- eine erste (5.1) und eine zweite (5.2) Vorrichtung, die jeweils eine elektrische und fluidische Zwischenverbindung bilden, die jeweils aus einem Bauteil aus elektronischem leitfähigem und gasdichtem Material gebildet ist, wobei die erste und die zweite Zwischenverbindung von einer Zuführleitung von Brennstoff (50) durchstoßen sind, die auf der Zelle auf der Seite der Anode (4.1) mündet, und von einer Rückgewinnungsleitung des erzeugten Wassers, an dem Umfang der Zelle auf der Seite der Anode derart, dass eine homogene Verteilung jeweils des zugeführten Brennstoffs und des erzeugten Wassers von der Zuführleitung bis zu der Rückgewinnungsleitung hergestellt wird; wobei die zweite Zwischenverbindung von einer Luft- oder Sauerstoffzuführleitung durchstoßen ist, die auf der Zelle auf der Seite der Kathode (2.1) mündet, und eine Rückgewinnungsleitung des Luft- oder Sauerstoffüberschusses, die an dem Umfang der Zelle auf der Seite der Kathode derart mündet, dass eine homogene Verteilung der Luft oder des Sauerstoffs von der Zuführleitung bis zu der Rückgewinnungsleitung hergestellt wird;
- eine erste Dichtung (61), die an dem Umfang der Einheitszelle und in Auflage sowohl gegen die erste Zwischenverbindung als auch gegen die zweite Zwischenverbindung eingerichtet ist;
- eine zweite Dichtung (63), die an dem Umfang der Kathode der Einheitszelle eingerichtet ist und sowohl gegen die zweite Zwischenverbindung als auch gegen den Elektrolyt anliegt; wobei die erste und zweite Zwischenverbindung auf der Basis von Glas und/oder Glaskeramik sind;
- eine Isolations- und Abdichtvorrichtung (8), die aus einer elektrisch isolierenden Scheibe (80) besteht, die von einer dritten (81) und einer vierten (82) Dichtung ohne Berührung miteinander eingespannt ist, wobei die dritte und vierte Dichtung metallisch sind, wobei die Vorrichtung an dem Umfang der ersten Dichtung mit der dritten und vierten Dichtung in Auflage jeweils gegen die erste und zweite Zwischenverbindung eingerichtet sind;
Modul, bei dem die erste und/oder die zweite Zwischenverbindung (mit mindestens einer Zuführleitung (58) und mindestens einer Rückgewinnungsleitung (58) eines Gases, Ausgleichsgas genannt, durchstoßen ist/sind, die auf dem Ringraum (E) münden, der zwischen der ersten Dichtung (61) und der Isolations- und Abdichtvorrichtung (8) derart abgegrenzt ist, dass eine homogene Verteilung des Ausgleichsgases von seiner Zuführleitung bis zu seiner Rückgewinnungsleitung hergestellt wird, um die Drücke auf jeder Seite der ersten Dichtung beim Betrieb der Zelle unter Druck auszugleichen.

4. Modul nach einem der vorhergehenden Ansprüche, wobei die erste und/oder die zweite Zwischenverbindung eine erste Nut (54) umfasst (umfassen), die zwischen der ersten Dichtung (61) und der Zelle (C1) hergestellt ist, wobei die Zuführleitung (50) der ersten Zwischenverbindung mit der ersten Nut (54) derart in Verbindung steht, dass die homogene Verteilung des zugeführten Wasserdampfs und des erzeugten Wasserstoffs oder des zugeführten Brennstoffs und des erzeugten Wassers bis zu der Rückgewinnungsleitung der ersten Zwischenverbindung hergestellt wird.

5. Modul nach einem der vorhergehenden Ansprüche, wobei die zweite Zwischenverbindung (5.2) eine zweite Nut (57) umfasst, die in dem Inneren einer Zone hergestellt ist, die von der zweiten Dichtung (63) abgegrenzt ist, wobei die Zuführleitung (51) der zweiten Zwischenverbindung mit der zweiten Nut (57) derart in Verbindung steht, dass die homogene Verteilung des erzeugten Sauerstoffs oder der zugeführten Luft bis zu der Rückgewinnungsleitung (58) der zweiten Zwischenverbindung hergestellt wird.

6. Modul nach einem der vorhergehenden Ansprüche, wobei die erste und die zweite Zwischenverbindung eine dritte Nut (53, 55) umfassen, die in dem Umfang der Zwischenverbindungen hergestellt ist, und in der die dritte (81) oder die vierte (82) Dichtung und die Isolierscheibe (80) eingerichtet sind, wobei die Einrichtung derart ist, dass die Isolierscheibe aus der dritten Nut (53, 55) vorragt.

7. Modul nach einem der vorhergehenden Ansprüche, wobei die elektrochemische Einheitszelle (C1), die erste (5.1) und die zweite (5.2) Zwischenverbindung, die erste (61) und die zweite (63) Dichtung sowie die Isolations- und Abdichtvorrichtung (8) achsensymmetrische Form um eine zentrale Achse (X) haben, die Zuführleitungen von Reagenzgasen (50) (Wasserdampf oder Brennstoff) und (51) (Dränagegas (51), wie Luft oder Luft oder Sauerstoff), gemäß der zentralen Achse (X) münden.

8. Modul nach einem der vorhergehenden Ansprüche, wobei die Abdichtvorrichtung aus einer Isolierscheibe (80) mit quadratischem oder rechteckigem Querschnitt besteht und die dritte (81) und vierte Dichtung (82) auf jeder ihrer Flächen ein oder mehr Vorsprünge umfasst/umfassen, bevorzugt mit dreieckigem Querschnitt, wobei die Gipfel der Vorsprünge angepasst sind, um sich durch Auflegen jeweils auf der Isolierscheibe und auf der ersten oder zweiten Zwischenverbindung zu verformen, um die Abdichtung sowohl auf der Isolierscheibe als auch auf jeder Zwischenverbindung herzustellen.

9. Modul nach einem der Ansprüche 1 bis 8, wobei die Abdichtvorrichtung aus einer Isolierscheibe (80) auf einer Basis von Zirconiumoxid (Zirconium) und einer dritten (81) und vierten (82) Dichtung auf einer Basis aus Eisen-Chrom-Aluminium-Legierung besteht.

10. Elektrolyse- oder Co-Elektrolyse-Reaktor EHT vom Typ SOEC, der eine Stapelung einer Vielzahl von Modulen (M1, M2) nach einem der Ansprüche 1 bis 2 und 4 bis 10 umfasst.

11. Brennstoffzelle vom Typ SOFC, die eine Stapelung einer Vielzahl von Modulen (M1, M2) nach einem der Ansprüche 3 bis 10 umfasst.

12. Betriebsverfahren eines Elektrolyse- oder Co-Elektrolysereaktors EHT nach Anspruch 10, wobei:
- die Zuführleitung (50) der ersten Zwischenverbindung (5.1) mit Wasserdampf oder einem Gemisch aus Wasserdampf und einem anderen Gas, das aus Kohlendioxid und Stickstoffdioxid ausgewählt wird, versorgt wird, und gleichzeitig die Zuführleitung (58) mit Ausgleichsgas, wobei der Druck des zugeführten Dampfs oder der Druck des zugeführten Gemisches im Wesentlichen gleich dem des Ausgleichsgases ist;
- der Wasserstoff oder der Wasserstoff und das Kohlenmonoxid oder der Stickstoff, der/die von der Elektrolyse oder Co-Elektrolyse erzeugt wird/werden und gleichzeitig das Ausgleichsgas in ihrer jeweiligen Rückgewinnungsleitung (59, 58) zurückgewonnen wird/werden.

13. Betriebsverfahren einer Brennstoffzelle SOFC nach Anspruch 11, wobei:
- die Zuführleitungen der ersten Zwischenverbindung mit Brennstoff, wie Wasserstoff oder Methan, und gleichzeitig die Zuführleitungen mit Ausgleichsgas versorgt werden;
- die Zuführleitungen der zweiten Zwischenverbindung mit Luft oder Sauerstoff versorgt werden, wobei der Druck des zugeführten Brennstoffs und der zugeführten Luft oder des zugeführten Sauerstoffs im Wesentlichen gleich dem des Ausgleichsgases ist;
- der Überschuss an Brennstoff, Ausgleichsgas, erzeugtem Wasser einerseits und der Überschuss an Luft oder Sauerstoff andererseits in ihrer jeweiligen Rückgewinnungsleitung zurückgewonnen werden.

14. Betriebsverfahren nach einem der Ansprüche 12 oder 13, wobei die Temperatur des Ausgleichsgases derart eingestellt wird, dass dieses Letztere die Betriebstemperatur des Elektrolyse- oder Co-Elektrolyse-Reaktors EHT oder der Brennstoffzelle SOFC reguliert.

15. Betriebsverfahren nach einem der Ansprüche 12 bis 14, wobei:
- eventuelle Lecks des Brennstoffs oder der Produkte, die den Elektrolyse-/Co-Elektrolyse-Reaktor oder die Brennstoffzelle SOFC versorgen oder aus ihnen austreten, durch Analyse des Durchsatzes des Ausgleichsgasgemischs an dem Ausgang seiner Rückgewinnungsleitung (58), reguliert werden, dann
- der Durchsatz von Luft als Ausgleichsgas am Eingang seiner Zuführleitung reguliert wird, um die erfassten Lecks zu verbrennen.

## Claims

1. A module that is intended to form a unit cell of an electrolysis or co-electrolysis reactor of the SOEC type, comprising:
- a unit electrochemical cell (C1) formed from a cathode (2.1), an anode (4.1), and an electrolyte (3.1) inserted between the cathode and the anode,
- a first device (5.1) and a second device (5.2), each forming an electrical and fluidic interconnector, each consisting of a component made of electron-conducting material and impervious to gases; the first and second interconnectors being arranged on either side of the unit cell; the first interconnector (5.1) having a steam supply line (50) passing through it, opening onto the cell on the cathode side (2.1), and a line for recovery of the hydrogen produced (59), opening on the periphery of the cell on the cathode side so as to provide uniform distribution of the steam supplied and of the hydrogen produced, respectively, from the supply line to the recovery line; the second interconnector (5.2) having a recovery line for the oxygen produced (57) passing through it, opening on the periphery of the cell on the anode side (4.1) so as to provide uniform distribution of the oxygen produced to the recovery line;
- a first seal (61) arranged at the periphery of the unit cell and resting both against the first interconnector and against the second interconnector;
- a second seal (63) arranged at the periphery of the anode of the unit cell and resting both against the second interconnector and against the electrolyte; the first and second seals being based on glass and/or glass-ceramic;
- an insulating and sealing device (8) consisting of an electrically insulating washer (80) clamped by a third seal (81) and a fourth seal (82) that are not in contact with one another, the third and fourth seals being made of metal, the device being arranged at the periphery of the first seal with the third and fourth seals resting against the first interconnector and against the second interconnector, respectively;
module in which the first and/or second interconnectors has (have) at least one supply line (58) and at least one recovery line for a gas, called equalization gas, passing through it (them), each opening into the annular space (E) delimited between the first seal (61) and the insulating and sealing device (8) so as to provide uniform distribution of the equalization gas from its supply line to its recovery line, in order to equalize the pressures on either side of the first seal while the reactor is operating under pressure.

2. The module as claimed in claim 1, the second interconnector (5.2) having a supply line for draining gas (51), such as air, passing through it, on the cell on the anode side so as to provide uniform distribution of the draining gas supplied and of the oxygen produced, respectively, from the supply line (51) to the recovery line (57).

3. A module that is intended to form a unit cell of a fuel cell of the SOFC type, comprising:
- a unit electrochemical cell (C1) formed from a cathode (2), an anode (4), and an electrolyte (3) inserted between the cathode and the anode,
- a first device (5.1) and a second device (5.2), each forming an electrical and fluidic interconnector, each consisting of a component made of electron-conducting material and impervious to gases; the first and second interconnector being arranged on either side of the unit cell; the first interconnector having a fuel supply line (50) passing through it, opening onto the cell on the anode side (4.1), and a recovery line for the water produced, at the periphery of the cell on the anode side so as to provide uniform distribution of the fuel supplied and of the water produced, respectively, from the supply line to the recovery line; the second interconnector having an air or oxygen supply line passing through it, opening onto the cell on the cathode side (2.1), and a recovery line for the surplus air or oxygen, opening on the periphery of the cell on the cathode side so as to provide uniform distribution of the air or oxygen, from the supply line to the recovery line;
- a first seal (61) arranged at the periphery of the unit cell and resting both against the first interconnector and against the second interconnector;
- a second seal (63) arranged at the periphery of the cathode of the unit cell and resting both against the second interconnector and against the electrolyte; the first and second seals being based on glass and/or glass-ceramic;
- an insulating and sealing device (8) consisting of an electrically insulating washer (80) clamped by a third seal (81) and a fourth seal (82) that are not in contact with one another, the third and fourth seals being made of metal, the device being arranged at the periphery of the first seal with the third and fourth seals resting against the first interconnector and against the second interconnector, respectively;
module in which the first and/or second interconnectors has (have) at least one supply line (58) and at least one recovery line (58) for a gas, called equalization gas, passing through it (them), opening into the annular space (E) delimited between the first seal (61) and the insulating and sealing device (8) so as to provide uniform distribution of the equalization gas from its supply line to its recovery line, in order to equalize the pressures on either side of the first seal while the cell is operating under pressure.

4. The module as claimed in one of the preceding claims, the first and/or the second interconnector comprising a first groove (54) provided between the first seal (61) and the cell (C1), the supply line (50) of the first interconnector communicating with the first groove (54) so as to provide uniform distribution of the steam supplied and of the hydrogen produced or of the fuel supplied and of the water produced, to the recovery line of the first interconnector.

5. The module as claimed in one of the preceding claims, the second interconnector (5.2) comprising a second groove (57) provided in a zone delimited by the second seal (63), the supply line (51) of the second interconnector communicating with the second groove (57) so as to provide uniform distribution of the oxygen produced or of the air supplied, to the recovery line (57) of the second interconnector.

6. The module as claimed in one of the preceding claims, the first and/or the second interconnector comprising a third groove (53, 55) provided at the periphery of the interconnectors and in which the third (81) or the fourth (82) seals and the insulating washer (80) are arranged, the arrangement being such that the insulating washer projects from the third groove (53, 55).

7. The module as claimed in one of the preceding claims, the unit electrochemical cell (C1), the first interconnector (5.1) and the second interconnector (5.2), the first seal (61) and the second seal (63) as well as the insulating and sealing device (8) being of axisymmetric shape about a central axis (X), the supply lines for reactive gases (50) (steam or fuel) and (51) (draining gas (51), such as air, or air or oxygen) opening out along the central axis (X).

8. The module as claimed in one of the preceding claims, the sealing device consisting of an insulating washer (80) of square or rectangular cross section and of third (81) and fourth seals (82) comprising, on each of their faces, one or more projections, preferably of triangular cross section, the apex of the projections being arranged to deform by resting respectively on the insulating washer and on the first or on the second interconnector, in order to establish hermeticity both on the insulating washer and on each interconnector.

9. The module as claimed in one of claims 1 to 8, the sealing device consisting of an insulating washer (80) based on zirconium oxide (zirconia) and of third (81) and fourth (82) seals based on iron-chromium-aluminum alloy.

10. An HTE electrolysis or co-electrolysis reactor, of the SOEC type comprising a stack of a plurality of modules (M1, M2) as claimed in one of claims 1 to 2 and 4 to 10.

11. A fuel cell of the SOFC type comprising a stack of a plurality of modules (M1, M2) as claimed in one of claims 3 to 10.

12. A method of operation of an HTE electrolysis or co-electrolysis reactor as claimed in claim 10 according to which:
- the supply lines (50) of the first interconnector (5.1) are supplied with steam or a mixture of steam and another gas selected from carbon dioxide and nitrogen dioxide and simultaneously the supply lines (58) are supplied with equalization gas, the pressure of the steam or of the mixture supplied being roughly equal to that of the equalization gas;
- hydrogen or hydrogen and carbon monoxide or nitrogen monoxide produced by electrolysis or co-electrolysis of the steam and simultaneously the equalization gas are recovered in their respective recovery line (59, 58).

13. A method of operation of an SOFC fuel cell as claimed in claim 11 according to which:
- the supply lines of the first interconnector are supplied with fuel, such as hydrogen or methane, and simultaneously the supply lines are supplied with equalization gas;
- the supply lines of the second interconnector are supplied with air or oxygen, the pressure of the fuel and air or oxygen supplied being roughly equal to that of the equalization gas;
- the surplus fuel, the equalization gas, the water produced on the one hand and the surplus air or oxygen on the other hand, are recovered in their respective recovery line.

14. The method of operation as claimed in one of claims 12 or 13, according to which the temperature of the equalization gas is regulated so that the latter controls the operating temperature of the HTE electrolysis or co-electrolysis reactor or of the SOFC fuel cell.

15. The method of operation as claimed in one of claims 12 to 14, according to which:
- any leakages of the fuel or of the products entering or leaving the electrolysis/co-electrolysis reactor or the SOFC fuel cell are detected by analysis of the flow rate of the mixture of equalization gas at the outlet of its recovery line (58), and then
- the flow rate of air as equalization gas is adjusted at the inlet of its supply line in order to burn the leaks that are detected.
